# EUROPEAN PATENT APPLICATION

(11) **EP 2 881 907 A1**
(43) Date of publication of application: **10.06.2015**
(21) Application number: 12882375.4
(22) Date of filing: 31.07.2012
(51) Int. Cl.: G06Q 20/14, G06Q 50/10

(54) **TRANSACTION MANAGEMENT SYSTEM AND TRANSACTION MANAGEMENT PROGRAM**

(71) Applicant: Kagiwada, Yoshimitsu, Ashigarakami-gun, Kanagawa 258-0002 (JP); KABUSHIKI KAISHA KEYSOFT, Ashigarakami-gun, Kanagawa 258-0002 (JP)
(72) Inventor: KAGIWADA, Yoshimitsu, Ashigarakami-gun Kanagawa 258-0002 (JP)
(74) Representative: Emde, Eric
(86) International application number: PCT/JP2012/069509
(87) International publication number: WO 2014/020711

(57) **Abstract**

A transaction setting information storage part stores an upstream trader from whom an intermediary trader purchases a product identified by a product ID, in association with the product ID and an intermediary trader ID of the intermediary trader. A price storage part stores a first sales price which is a sales price of the product by an upstream trader identified with an upstream trader ID, in association with the product ID and the upstream trader ID, and to store a second sales price which is a sales price of the product by the intermediary trader, in association with the product ID and the intermediary trader ID. An order management part receives, from a downstream trader to whom the intermediary trader sells the product, an order of the product to the intermediary trader together with input of the product ID, a downstream trader ID of the downstream trader, and an order quantity of the product. A slip issuance processing part issues an order slip from the downstream trader to the intermediary trader on the basis of the order quantity received by the order management part and the second sales price, and issues an order slip from the intermediary trader to the upstream trader on the basis of the order quantity received by the order management part and the first sales price.

## Description

### TECHNICAL FIELD

The invention relates to a transaction management system and a transaction management program.

### BACKGROUND ART

In product distribution from producers such as product manufacturer to end users, multiple traders such as wholesalers and retailers are often involved at various stages. For the case where multiple traders are involved at various stages in the product distribution, there has been a demand for a mechanism that enables a person concerned to easily know transaction statuses between traders and to know product distribution channels without difficulty.

In recent years, product ordering processing through a network has become very active, in which an orderer wishing to purchase a product places an order by accessing an order recipient's server or the like from their terminal device through the network. Such processing may be made not only between two parties including the orderer and the order recipient, but also among three parties including, for example, an actual product supplier, an intermediary agent, and a customer purchasing the product.

For example, Patent Document 1 (Japanese Patent Application Publication No.2007-172081) describes an intermediary sales support system and an intermediary sales support method. This intermediary sales support technique employs a configuration in which an intermediary server system and a product supplier server system are connected to each other via a network. When a link contained on an intermediary home page provided by the intermediary server system is selected by a customer on a customer terminal device, the product supplier server system displays a product supplier home page on a display screen of the customer terminal device. When the customer requests order form generation data of the product selected on the product supplier home page, the product supplier server system transmits the order form generation data to the customer terminal device. The intermediary server system receives order form data prepared by the customer on the basis of the order form generation data from the customer terminal device. In this manner, if the home page used for sales by the intermediary is formed to contain the link of the product supplier home page, the intermediary is enabled to provide the latest information to customers while saving the time and labor for updating the home page. The intermediary server system is configured to generate order slip data for a product supplier based on order data of the customer who is an orderer of the product.

### PRIOR ART DOCUMENT

### PATENT DOCUMENT

Patent Document 1: Japanese Patent Application Publication No.2007-172081

### SUMMARY OF THE INVENTION

### PROBLEM TO BE SOLVED BY THE INVENTION

However, according to the technique described in Patent Document 1, the intermediary server system is configured to just transfer data of customer's ordered items and shipping destination to the product supplier server system, but is not configured to automatically perform processing for product transactions between the intermediary and the product supplier. Although this technique enables ordering processing, this technique still has a problem of requiring time and labor for management because slip management of actual transactions must be made separately.

In view of the foregoing problems, an object of the invention is to provide a transaction management system and a transaction management program capable of simplifying slip management of product transactions between multiple traders at various stages.

### MEANS FOR SOLVING THE PROBLEM

According to the invention, there is provided a transaction management system includes: a transaction setting information storage part configured to store an upstream trader from whom an intermediary trader purchases a product identified by a product ID, in association with the product ID and an intermediary trader ID of the intermediary trader; a price storage part configured to store a first sales price which is a sales price of the product by an upstream trader identified with an upstream trader ID, in association with the product ID and the upstream trader ID, and to store a second sales price which is a sales price of the product by the intermediary trader, in association with the product ID and the intermediary trader ID; an order management part configured to receive, from a downstream trader to whom the intermediary trader sells the product, an order of the product to the intermediary trader together with input of the product ID, a downstream trader ID of the downstream trader, and an order quantity of the product; and a slip issuance processing part configured to issue an order slip from the downstream trader to the intermediary trader on the basis of the order quantity received by the order management part and the second sales price, and to issue an order slip from the intermediary trader to the upstream trader on the basis of the order quantity received by the order management part and the first sales price.

Thus, for a product identified with an product ID, an upstream trader from whom an intermediary trader purchases product identified with a product ID, and a first sales price of the product sold by the upstream trader are stored in the transaction setting information storage part and the price storage part. Thus, the transaction management system can figure out a sales price of the product between the intermediary trader and the upstream trader when an order is made from a downstream trader. Therefore, the transaction management system can automatically issue not only an order slip of the downstream trader to the intermediary trader, but also an order slip of the intermediary trader to the upstream trader. For example, when transactions at multiple stages are made among three parties or more, like one transaction between the downstream trader and intermediary trader, and another transaction between the intermediary trader and the upstream trader, an order slip to the upstream trader can be easily issued by using a first sales price of the upstream trader based on the order quantity of product entered by the downstream trader, provided that there is no change of the traded order quantity.

Here, the upstream trader may be or may not be a user of the transaction management system. When the upstream trader is a user of the system, the order slip is displayed, for example, on a display of a user terminal of the upstream trader, with the system logged in by the upstream trader. Further, electronic product ordering processing to the upstream trader can be performed automatically. Since the order slip is automatically issued even when the upstream trader is not a user of the system, ordering processing can be simply performed by sending the order slip by fax or by attaching to an electronic mail. Further, when the transaction management system comprises multiple distributed servers and each of the upstream trader and their downstream trader is a user of a different server, ordering processing can be made between the traders by data coordination between the servers.

In the transaction management system according to the invention, the slip issuance processing part can issue a bill slip or a delivery slip from the upstream trader to the intermediary trader based on an order quantity and a first sales price used to issue an order slip from the intermediary trader to the upstream trader, and a bill slip or a delivery slip from the intermediary trader to the downstream trader based on an order quantity and a second sales price used to issue an order slip from the downstream trader to the intermediary trader.

Order quantities of product traded in such transactions are same with each other. Accordingly, issuance of a bill slip or delivery slip can be made easily by using data used for issuance of an order slip from the downstream side to the upstream side for a bill slip or delivery slip from the upstream side to the downstream side.

Further, in the transaction management information storage part of the transaction management system according to the invention, entire product distribution can be figured out by linking transaction data in which the upstream trader and the downstream trader match each other by the product ID.

Further, by enabling a person to view inventory status of upstream traders for a specific product, necessity of ordering and delivery of an order can be forecast. On the other hand, by enabling a person to view the inventory status of downstream traders for a specific product, order reception can be forecast.

Further, when the downstream trader finds a defect (such as quantity shortage and quality defect) when product is delivered, the intermediary trader may register the defect and notice it to the upstream trader prior to acceptance between the intermediary trader and the upstream trader, and may urge re-delivery. In such a manner, security of product quality can be achieved with a convenient DB structure.

As seen from the above, the transaction management system according to the invention is capable of efficiently performing ordering management, delivery management, billing management, product quality management, and product distribution management on the basis of a transaction pattern comprising a product recipient and product shipper at each end with a predetermined number of intermediary agents therebetween. That is, one of major features of the invention is capability of those managements by a patterned convenient data structure of the transaction management information storage part.

Here, the product includes not only tangible objects but also "services" being intangible objects. "Sales" includes not only sales of product but also "provision" of services. Accordingly, the transaction management system according to the invention is applicable to not only product transaction but also provision of services.

The delivery management part of the transaction management system according to the invention is configured to perform the steps comprising: receiving the transaction ID and shipping completion notice from the upstream trader; determining whether acceptance of the transaction between traders identified with the transaction ID is on the shipping basis or on the delivery basis, and if the acceptance is on the shipping basis, turning the inter-trader chargeable flag on, and if the acceptance is on the delivery basis, registering in a queue list; and if product reception data is sent from a terminal device of the downstream trader, storing the date, and determining whether the product reception date is written for a transaction ID registered periodically in the queue list, and if the product reception date is written, turning the inter-trader transaction chargeable flag on the delivery inspection of the transaction ID. The slip issuance processing part creates slip data only for a transaction with the chargeable flag turned on, according to the billing type, immediately for every-transaction billing, and on a closing day for cycle billing.

According to an aspect of the invention, slips having a so-called front and rear relation, such as the purchase order and the invoice can be created at an appropriate timing. The same applies to the sales ledger and the purchase ledger.

Any combination of components described above and representation of the invention transformed among a device, a system, a recording medium, a computer program, and so on are valid as embodiments of the invention.

### EFFECT OF THE INVENTION

According to an aspect of the invention, slip management of product transactions at various stages between multiple traders can be simplified.

### BRIEF DESCRIPTION OF THE DRAWINGS

[Fig. 1] Fig. 1 is a block diagram illustrating a configuration of a transaction management system and a user terminal according to an embodiment of the invention.
[Fig. 2] Fig. 2 is a functional block diagram detailing a configuration of a transaction management system according to an embodiment of the invention.
[Fig. 3] Fig. 3 illustrates an example of data configuration of a product information storage part.
[Fig. 4] Fig. 4 illustrates an example of data configuration of a trader information storage part.
[Fig. 5] Fig. 5 illustrates an example of data configuration of a transaction setting information storage part.
[Fig. 6] Fig. 6 illustrates an example of data configuration of a price storage part.
[Fig. 7] Fig. 7 illustrates an example of data configuration of a transaction management information storage part.
[Fig. 8] Fig. 8 is a flowchart illustrating an example of a processing procedure of an order management part.
[Fig. 9] Fig. 9 is a flowchart illustrating an example of a processing procedure of an order management part.
[Fig. 10] Fig. 10 schematically illustrates an example of data configuration of a transaction management information storage part illustrated in Fig. 7.
[Fig. 11] Fig. 11 is a flowchart illustrating an example of a processing procedure of a delivery management part.
[Fig. 12] Fig. 12 schematically illustrates an example of data configuration of the transaction management information storage part.
[Fig. 13] Fig. 13 is a flowchart illustrating an example of a processing procedure of the delivery management part.
[Fig. 14] Fig. 14 is a flowchart illustrating an example of a processing procedure of a slip issuance processing part.
[Fig. 15] Fig. 15 schematically illustrates a slip provided by the slip issuance processing part.
[Fig. 16] Fig. 16 schematically illustrates a slip provided by the slip issuance processing part.
[Fig. 17] Fig. 17 is a flowchart illustrating a processing procedure for a distribution state management part offering the quantity of product shipped by a downstream trader.
[Fig. 18] Fig. 18 illustrates an example of data configuration of the transaction management information storage part.
[Fig. 19] Fig. 19 illustrates another example of data configuration of the transaction management information storage part.
[Fig. 20] Fig. 20 is a flowchart illustrating a processing procedure for the distribution state management part offering the quantity of product shipped by a downstream trader.
[Fig. 21] Fig. 21 illustrates another example of data configuration of the transaction management information storage part.
[Fig. 22] Fig. 22 illustrates an example of data configuration of an inventory information storage part.
[Fig. 23] Fig. 23 illustrates an example of inventory information offered to the user.
[Fig. 24] Fig. 24 illustrates data configuration of the transaction management information storage part according to a second embodiment of the invention.
[Fig. 25] Fig. 25 is a flowchart illustrating a processing procedure of a shipping start-up routine of the delivery management part according to the second embodiment of the invention.
[Fig. 26] Fig. 26 is a flowchart illustrating a processing procedure of a fixed cycle start-up routine of the delivery management part according to the second embodiment of the invention.
[Fig. 27] Fig. 27 is an illustrative diagram of an order information flow and a product flow according to an embodiment of the invention.

### MODE FOR CARRYING OUT THE INVENTION

Hereinafter, embodiments of the invention are described with reference to the accompanying drawings. Throughout all of the drawings, a like component is referred to with a like reference numeral, and description thereof is omitted as appropriate.

### [First Embodiment]

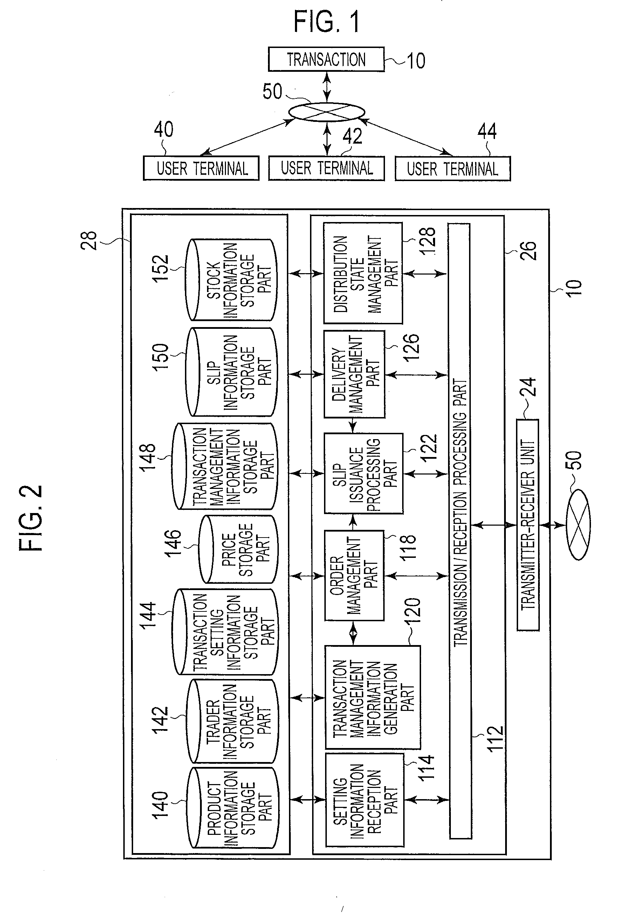

Fig. 1 is a block diagram illustrating a configuration of transaction management system 10 according to a first embodiment of the invention, and user terminal 40, user terminal 42, and user terminal 44, the terminals of respective traders communicating with transaction management system 10.

Transaction management system 10 is connected with terminals such as user terminal 40, user terminal 42, and user terminal 44 via network 50. Network 50 may be, for example, a public network such as internet, or a local network such as intranet.

Transaction management system 10 is managed and operated by, for example, a transaction management service provider. Transaction management system 10 manages product order reception and placement processing between traders in product distribution. Each of user terminal 40, user terminal 42, and user terminal 44 may be, for example, a terminal such as a personal computer of the trader performing transaction by utilizing a service provided by the transaction management service provider. In this embodiment, the trader may be a trader.

In this embodiment, transaction management system 10 may be configured, for example, to comprehensively hold transaction management information on transactions among producers such as product manufacturers, end users, and traders such as wholesalers and retailers involved between the produces and the end users. With such a configuration, transaction management system 10 is able to easily perform slip issuance processing, ledger generation processing, inventory management processing, product distribution traceability management, and the like on the basis of not only data between two parties directly selling and buying a product, but also data of various transaction stages in the product distribution. Further, with such a configuration, transaction management system 10 is able to divert information used for a downstream transaction in the transaction management information to the transaction management information for an upstream transaction, and divert information used for an upstream transaction in the transaction management information to the transaction management information for downstream. Since traders can access such comprehensive data, transaction management system 10 does not need to transmit and receive data to and from the traders in later-described operation for providing slips, ledgers and the like to the traders.

Fig. 2 is a functional block diagram detailing a configuration of transaction management system 10 according to this embodiment.

Transaction management system 10 includes transmitter-receiver unit 24 configured to transmit and receive data via network 50, central processing unit 26 configured to process data received from transmitter-receiver unit 24, and data storage unit 28 configured to store data.

Central processing unit 26 includes, as components, transmission/reception processing part 112, setting information reception part 114, order management part 118, transaction management information generation part 120, slip issuance processing part 122, delivery management part 126, and distribution state management part 128. Data storage unit 28 includes, as components, product information storage part 140, trader information storage part 142, transaction setting information storage part 144, price storage part 146, transaction management information storage part 148, slip information storage part 150, and inventory information storage part 152.

Each component of central processing unit 26 and data storage unit 28 of transaction management system 10 illustrated in Fig. 2 represents a function-based block but not a hardware-based configuration. Each component of central processing unit 26 and data storage unit 28 of transaction management system 10 is achieved by any combination of hardware and software, mainly including a CPU of any computer, a memory, a program implementing components illustrated in Fig. 2 and loaded into a memory, storage unit such as a hard disk for storing the program, and an interface for network connection. It will be understood by a person skilled in the art that there are many variations of the implementation method and device. Although not illustrated here, transaction management system 10 may include an input part for data input/output such as, for example, a keyboard and mouse, and a display part such as, for example, a display. Further, central processing unit 26 may be configured to include an input/output processing function for data input/output between the input part and the display part. Configuration of transaction management system 10 is not limited to a configuration of physically one device, but may be a configuration of distributed devices.

Next, components of central processing unit 26 and data storage unit 28 are described specifically. Transmission/reception processing part 112 transmits and receives data from transmitter-receiver unit 24.

Product information storage part 140 stores information on products, whose transaction is managed by the user of transaction management system 10 by using transaction management system 10, in association with the product IDs. Trader information storage part 142 stores information on the trader who is a user of transaction management system 10, in association with the trader ID.

Transaction setting information storage part 144 stores the product ID of products sold by traders, in association with the trader ID. Transaction setting information storage part 144 can store the upstream trader ID of an order recipient upstream trader from whom the trader purchases product identified with the product ID, the downstream trader ID of a downstream trader who is an orderer of product identified with the product ID to the trader, the quantity which can be sold to the downstream trader, the ordering management mode, and the product management mode, as transaction setting information, in association with a combination of the trader ID and the product ID.

Price storage part 146 stores the sales price of products which are sold by traders to a downstream trader as an orderer, in association with the product ID, the trader ID, and the downstream trader ID of the downstream trader as the orderer.

Setting information reception part 114 receives various setting information entered by the user from a user terminal such as user terminals 40 to 42 via network 50, and stores into product information storage part 140, trader information storage part 142, transaction setting information storage part 144, and price storage part 146, respectively. In this embodiment, data to be stored in transaction setting information storage part 144 and price storage part 146 may be entered by the user as a trader directly through a user terminal such as user terminals 40 to 42, and information which has been set by traders may be entered by an operator or the like through a user terminal such as user terminals 40 to 42, or the input part of transaction management system 10.

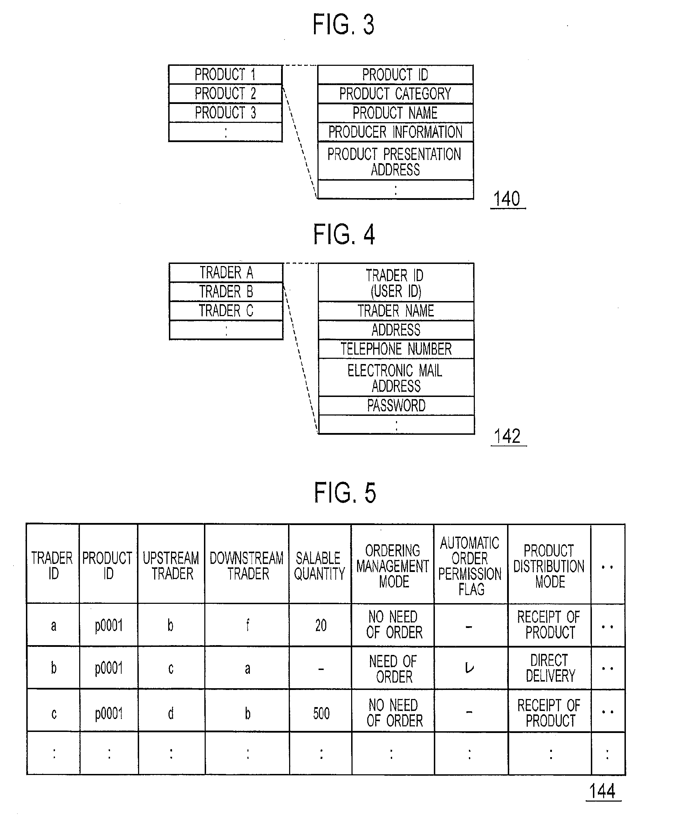

Fig. 3 illustrates an example of data configuration of product information storage part 140. Product information storage part 140 stores information on products such as product category, product name, producer information, and product presentation address in association with the product ID.

Fig. 4 illustrates an example of data configuration of trader information storage part 142. Trader information storage part 142 stores information on traders such as the trader name, address, telephone number, electronic mail address, password, and trader introduction address, in association with the trader ID. Here, the trader ID may be used as a user ID which identifies the user when each trader logs in transaction management system 10 or does the like.

Fig. 5 illustrates an example of data configuration of transaction setting information storage part 144. Transaction setting information storage part 144 stores information such as the product ID of a product sold by the trader, the upstream trader ID of the order recipient upstream trader from whom the trader purchases a product identified with the product ID, the downstream trader ID of the downstream trader who is an orderer ordering a product identified with the product ID to the trader, the quantity which can be sold to the downstream trader, the order managing mode indicating whether the product is ordered to the upstream trader or not, the automatic order permission flag indicating whether automatic ordering to the upstream trader is authorized or not, and the product distribution mode for the product ordered to the upstream trader, in association with the trader ID of the target trader (corresponding to the intermediary trader).

Here, the ordering management mode indicates whether further ordering to an upstream trader is necessary or not when the trader receives an order of a product from a downstream trader. For example, when the intermediary trader having stocks provides a product to the downstream trader out of the own stock in response to an order received from the downstream trader, the ordering management mode is "no need of order" since an order to the upstream trader is not needed at that point. For example, in an example illustrated in Fig. 5, the ordering management mode for traders identified with trader IDs "a" and "c" is "no need of order" since the traders hold stocks of the product identified with the product ID "p0001". On the other hand, the ordering management mode for the trader identified with the trader ID "b" is "need of order". This indicates that when an order is placed to a trader identified with the trader ID "b" by a downstream trader identified with the downstream trader ID, ordering to an upstream trader identified with a further upstream trader ID is needed.

When setting the ordering management mode to "need of order", either automatic ordering to the upstream trader or necessity of confirmation with the said trader may be selected in an distinguishable manner. If ordering to the upstream trader may be done automatically, the automatic order permission flag in the automatic order permission flag field is turned on. Here, turning on of the automatic ordering flag is indicated by a check mark. In the example illustrated in Fig. 5, the ordering management mode for the trader identified with the trader ID "b" is "need of order", and the check mark is placed in the automatic order permission flag field. This indicates that when a trader identified with the trader ID "a" places an order of a product identified with the product ID "p0001" to a trader identified with the upstream trader ID "b", ordering may be done automatically to a trader identified with the upstream trader ID "c", who is an order recipient of the trader identified with the trader ID "b".

Terms "upstream" and "downstream" used herein correspond to the product flow from an upstream trader to a downstream trader.

The product distribution mode indicates a distribution style of the product to the said trader when an order is placed by the said trader to an upstream trader. For example, when the said trader receives the product from an upstream trader, the product distribution mode may be set to "receipt of product". When the trader only acts as an intermediary trader for an order from a downstream trader with an upstream trader but does not receive the product, the product distribution mode may be set to "direct delivery". For example, in the example illustrated in Fig. 5, the product distribution mode for traders identified trader IDs "a" and "c" is "receipt of product". This indicates that traders identified with trader IDs "a" and "c" need to actually receive the product from their upstream traders. On the other hand, the ordering management mode for the trader identified with the trader ID "b" is "direct delivery". This indicates that the trader identified with trader ID "b" just serves as an intermediary of transaction and does not need to actually receive the product from their upstream trader. This means that, after an order is placed to a trader identified with the upstream trader ID "c", the product shipped from the upstream trader ID "c" is directly delivered to the trader identified with the trader ID "a", but not delivered to the trader identified with the trader ID "b".

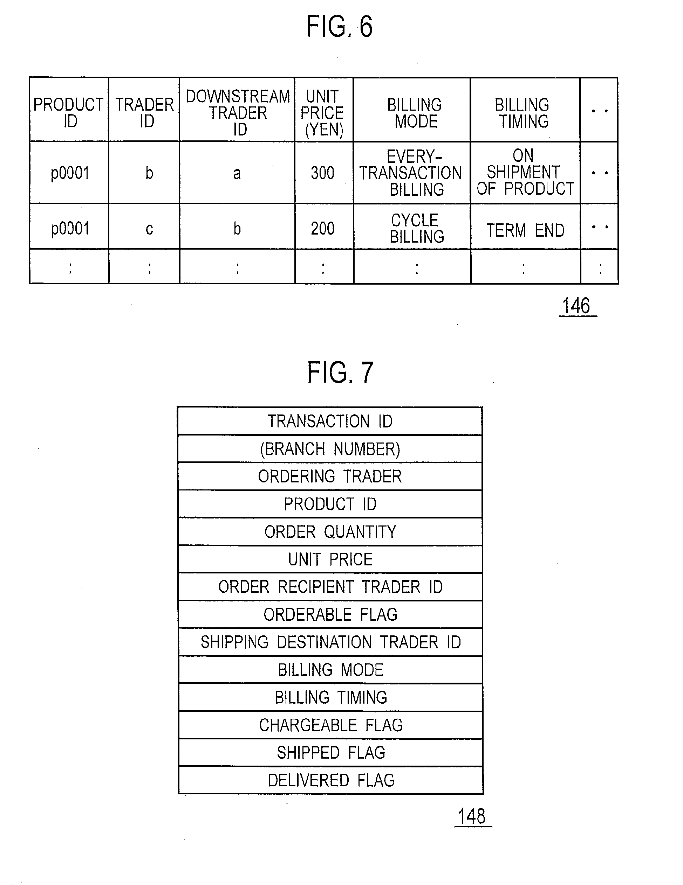

Fig. 6 illustrates an example of data configuration of price storage part 146. Price storage part 146 stores information such as the trader ID, the downstream trader ID, the sales price (unit price (yen)), the billing mode, and the billing timing, in association with the product ID. The billing mode and the billing timing may be determined between an upstream trader as an orderer and a trader as an order recipient, and may be registered, for example, by a trader as an order recipient from any of user terminals 40 to 42 into price storage part 146 via setting information reception part 114.

Here, in the billing mode field, the billing mode may be selected from the every-transaction billing issuing a bill per order, or the cycle billing issuing a collective bill covering a batch of bills closed, for example, at the month end or term end. For example, when the billing mode is the every-transaction billing, the billing timing may be selected in the billing timing field from "when ordered" indicating an agreement to issue a bill when a product is ordered from a downstream trader, "on shipment of product" indicating an agreement to issue a bill when a product is shipped from an upstream trader as an order recipient, and "on delivery of product" indicating an agreement to issue a bill when a product is delivered to a trader as an orderer. Also, for example, when the billing mode is the cycle billing, the billing timing may be selected in the billing timing field from "term end" indicating an agreement to collectively issue a batch of bills at the end of term, and "month end" indicating an agreement to collectively issue a batch of bills at the end of month. The sales price is basically set higher toward the downstream. Thus, the wholesaler as a trader can get a sales profit.

### (Ordering processing)

Next, an ordering processing procedure in transaction management system 10 according to this embodiment is described. Referring back to Fig. 2, order management part 118 manages ordering processing based on a product ordering instruction received from a user as a trader. Hereinafter, the description is provided assuming that a downstream trader denotes a trader issuing a product ordering instruction in the first place, an intermediary trader denotes a trader who receives the order from the downstream trader, and moreover an upstream trader denotes a trader who receives the order from the intermediary trader. When a product ordering instruction is issued by a downstream trader, order management part 118 determines whether an intermediary trader as an order recipient further orders the product to an upstream trader on the upstream side. When determining that the product is ordered to the upstream trader on the upstream side, order management part 118 also performs ordering processing to the upstream trader on the upstream side.

When ordering a product, the downstream trader logs in transaction management system 10 via network 50 by entering, for example, the downstream trader ID as their user ID and the password through any of user terminals 40 to 42. When the logged-in downstream trader issued the ordering instruction, order management part 118 receives order information entered by the downstream trader. In this embodiment, order management part 118 receives input of the downstream trader ID of the downstream trader as an orderer, the product ID of a product to be ordered, and the order quantity of the product to be ordered. Order management part 118 also acquires the intermediary trader ID of an intermediary trader as an order recipient selling the product to the downstream trader, and the sales price as order information from transaction setting information storage part 144 and price storage part 146, with the downstream trader ID of the downstream trader and the product ID as keys.

When the downstream trader issues the product ordering instruction in the logged state, order management part 118 may provide, for example, an input screen (not shown) for entering order information into the user terminal. By receiving input of the product name or the product ID from the downstream trader, order management part 118 may read out and provide, on an input screen of the user, information on the relevant product from product information storage part 140, transaction setting information storage part 144, price storage part 146, and so on with the product name or the product ID as a key. Further, order management part 118 may access transaction setting information storage part 144 and price storage part 146 with the downstream trader ID of the downstream trader as a key, acquire product IDs of multiple products for which the downstream trader is set as the downstream trader, and displays as a list on the input screen so as to allow the downstream trader to select a product. In this case, product information may be read from product information storage part 140 with the product ID as a key and displayed on the input screen as well. At that time, order management part 118 may read out the salable quantity of the product and others allocated by the upstream trader to the downstream trader, from transaction setting information storage part 144 with the downstream trader ID and the product ID as keys, and display on the input screen.

Upon receiving the ordering instruction from the downstream trader, order management part 118 issues the transaction ID. After issuing the transaction ID, order management part 118 notifies transaction management information generation part 120 accordingly. Transaction management information generation part 120 generates transaction management information including order information received by order management part 118 from the user, and order information acquired from transaction setting information storage part 144 and price storage part 146, in association with the transaction ID issued by order management part 118. Transaction management information generation part 120 stored generated transaction management information in transaction management information storage part 148.

Term of "receive from a trader" used herein means that functions of transaction management system 10 receive a direction or information when a trader is identified with the transaction ID of the user through user terminals used by the trader such as user terminals 40 to 42, and so on.

Fig. 7 illustrates an example of data configuration of transaction management information storage part 148. Transaction management information storage part 148 includes the transaction ID field, the branch number field, the ordering trader ID field, the product ID field, the order quantity field, the unit price field, the order recipient trader ID field, the shipping destination trader ID field, and so on. Further, transaction management information storage part 148 includes the orderable flag field, the billing mode field, the billing timing field, the chargeable flag field, the shipped flag field, the delivered flag field, and so on. Those flag fields are used to control the timing for issuance of slips by slip issuance processing part 122 described later. Transaction management information generation part 120 stores the downstream trader ID of the downstream trader being an orderer as the "ordering trader ID", and the intermediary trader ID of the order recipient intermediary trader as the "order recipient trader ID".

In this embodiment, order management part 118 accesses the product distribution mode field of transaction setting information storage part 144, and if "receipt of product" is set in transaction setting information where the downstream trader is a target trader, order management part 118 acquires the downstream trader ID of the downstream trader as the shipping destination trader ID. On the other hand, order management part 118 accesses the product distribution mode field of transaction setting information storage part 144, and if , for example, "direct delivery" or the like is set in transaction setting information where the downstream trader is a target trader, but not "receipt of product", order management part 118 refers to the product distribution mode field of transaction setting information in which a downstream trader of the downstream trader is a target trader, and determines whether the "receipt of product" is set therein. Here, if "receipt of product" is set in the product distribution mode field, order management part 118 acquires the transaction ID of the target trader as the shipping destination trader ID. On the other hand, if "receipt of product" is not set therein, but "direct delivery" or the like, order management part 118 further refers to a product distribution mode field of transaction management information in which a downstream trader on a further downstream side is a target trader, and determines whether "receipt of product" is set therein. Order management part 118 repeats this processing and performs processing of acquiring, as the shipping destination trader ID, the trader ID of a trader of transaction setting information in which "receipt of product" is set in the product distribution mode field of the target trader.

For example, in the example illustrated in Fig. 5, the product distribution mode of transaction setting information for a trader identified with the trader ID "a" is "receipt of product". Therefore, for a transaction between a trader identified with the trader ID "a" and a trader identified with the trader ID "b", order management part 118 acquires the trader ID "a" as the shipping destination trader ID. On the other hand, the product distribution mode field of transaction setting information for a trader identified with the trader ID "b" is set to "direct delivery". In this case, order management part 118 refers to the product distribution mode field of transaction setting information for a trader identified with the transaction ID "a" downstream the trader identified with the trader ID "b", and determines whether "receipt of product" is indicated in the field. Here, the product distribution mode field of transaction setting information for the trader identified with the trader ID "a" is set to "receipt of product". Therefore, for a transaction between a trader identified with the trader ID "b" and a trader identified with the trader ID "c", order management part 118 acquires the trader ID "a" as the shipping destination trader ID.

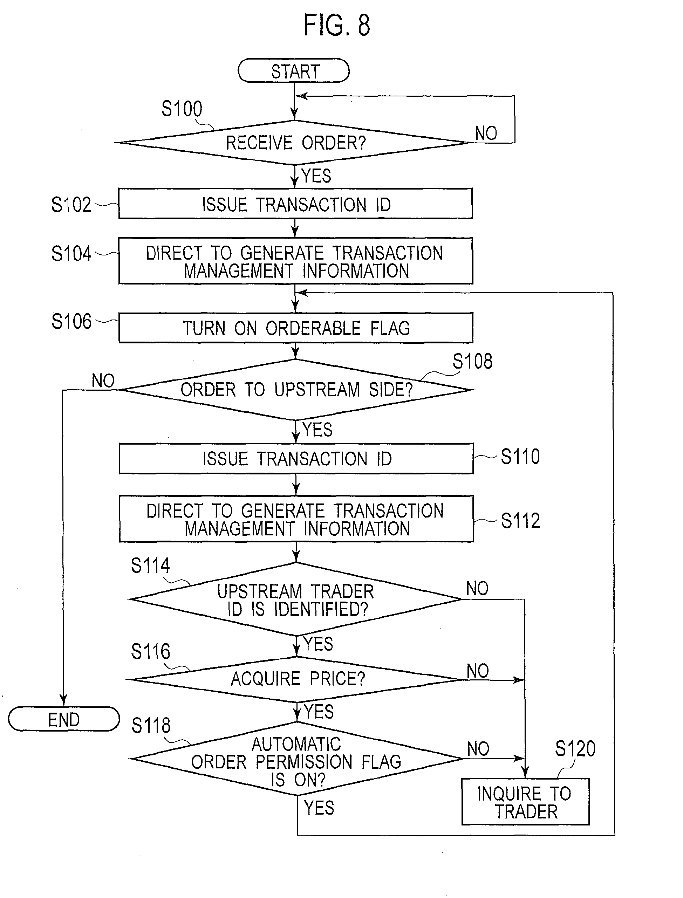

Fig. 8 is a flowchart illustrating an example of processing procedure when order management part 118 receives a product ordering instruction from the downstream trader.

Upon receiving the ordering instruction (step S100: YES), order management part 118 issues the transaction ID (step S102). Here, the transaction ID can identify transactions not overlapping those identified by other transaction IDs. Order management part 118 passes the issued transaction ID and the acquired order information to transaction management information generation part 120 and directs transaction management information generation part 120 to generate transaction management information (step S104). According to the direction, transaction management information generation part 120 generates transaction management information in transaction and stores in transaction management information storage part 148. Transaction management information includes the transaction ID, the ordering trader ID, the product ID, the order quantity, the sales price (unit price), the order recipient trader ID, and so on. In the embodiment, as described with reference to Fig. 7, the transaction management information may have a configuration also including the orderable flag field, the billing mode field, the billing timing field, the chargeable flag field, the shipped flag field, and the delivered flag field.

At that time, since the ordering instruction is issued directly by the downstream trader, order management part 118 turns on the orderable flag in the orderable flag field of the transaction management information (step S106).

Then, order management part 118 accesses transaction setting information storage part 144 with the downstream trader ID and the product ID as keys, verifies setting in the ordering management mode field for the trader ID of the trader which is an intermediary trader being identified with those keys, and determines whether to perform ordering processing to the upstream side (step S108). When "ordering required" is set in the ordering management mode field, order management part 118 determines that ordering processing to the upstream side is necessary (step S108: YES).

When determining that ordering processing to the upstream side is necessary (step S108: YES), order management part 118 issues a new transaction ID (step S110). Here, when thus determined that ordering processing to the upstream side is necessary as a result of the ordering processing on the downstream side, order management part 118 may issue a transaction ID including identification information same as identification information included in a transaction ID issued for ordering processing on the downstream side, such as, for example, same identification information provided with a branch number. In this embodiment, order management part 118 also adds a branch number to the transaction ID issued at the step S102, and issues a transaction ID for a new transaction by adding another branch number to the transaction ID issued at the step S102. Order management part 118 passes the issued transaction ID and the acquired order information to transaction management information generation part 120, and directs transaction management information generation part 120 to generate new transaction management information (step S112). At that time, transaction management information generation part 120 may take over the product ID and the order quantity from downstream transaction management information.

Then, order management part 118 determines whether automatic ordering processing to the upstream side is available. First, order management part 118 accesses transaction setting information storage part 144 with the downstream trader ID and the product ID as keys, verifies setting in the upstream trader ID field for the trader ID of the trader which is an intermediary trader being identified with those keys, and determines whether the upstream trader ID is set (step S114). If the upstream trader ID is set (step S114: YES), order management part 118 accesses price storage part 146, and determines whether a trader ID of the trader being an intermediary trader as the downstream trader ID, the upstream trader ID as the trader ID, and the sales price (unit price) in information where the product ID is set are set (step S116).

If the sales price (unit price) is set, order management part 118 accesses transaction setting information storage part 144 with the downstream trader ID and the product ID as keys, verifies setting in the automatic order permission flag field for the trader ID of the trader which is an intermediary trader being identified with those keys, and determines whether the automatic order permission flag is turned on (step S118). When the automatic order permission flag is turned on (step S118: YES), automatic ordering processing may be performed without user's confirmation. Then, the process proceeds to step S106, and order management part 118 turns on the orderable flag of the transaction management information. If YES at the step S114, order management part 118 acquires the upstream trader ID, and if YES at the step S116, acquires the sales price (unit price), and may notify those as order information to transaction management information generation part 120 sequentially. Transaction management information generation part 120 may store order information notified by order management part 118 in transaction management information storage part 148 by adding to transaction management information.

After the step S106, order management part 118 repeats same processing until determining that ordering processing to the upstream side is not necessary (step S108: NO), and performs same ordering processing for a trader in a transaction where the ordering management mode is set to "need of order" on the upstream side.

On the other hand, when the upstream ID is not set at the step S114 (step S114: NO), and when the sales price (unit price) is not set at the step S116 (step S116: NO), or when the automatic order permission flag is not turned on at the step S118 (step S118: NO), order management part 118 performs inquiry processing to the order recipient trader (in this case, intermediary trader) (step S120) since automatic ordering processing is not authorized. Also in this case, as the transaction ID has been issued at the step S110, order management part 118 can provide the transaction ID as well when inquiring to the intermediary trader. This facilitates generation of transaction management information when order information is entered by the intermediary trader later.

Thus, a system may be configured to automatically generate transaction management information on ordering to the upstream side by using information on an upstream trader to whom an order recipient trader selling product orders the product, and the sales price by the said upstream trader, stored in transaction setting information storage part 144 and price storage part 146. Also, automatic ordering processing can be performed by setting the automatic ordering propriety flag.

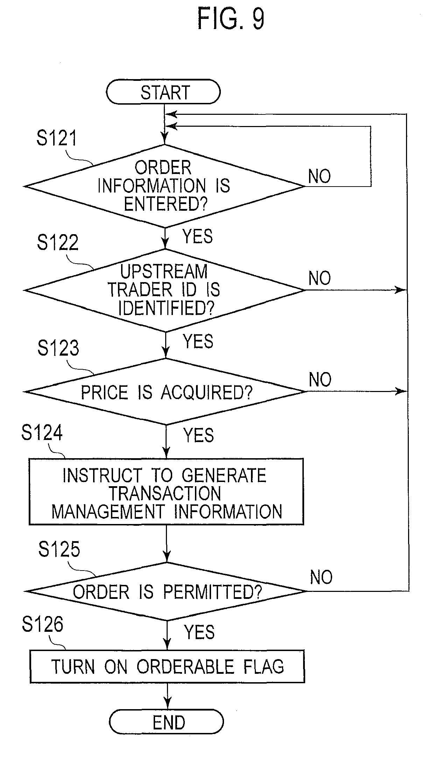

Fig. 9 is a flowchart illustrating an example of a processing procedure when order management part 118 receives entry of order information from the intermediary trader as the user after inquiry to a trader at the step S120 of Fig. 8.

Here, when the transaction ID is entered and entry of order information is indicated (step S121: YES) while a user as the intermediary trader has logged in transaction management system 10, order management part 118 receives user's inputs of the upstream trader ID, sales price (unit price) and others as order information (step S122: YES, step S123: YES). Order management part 118 notifies the received order information to transaction management information generation part 120, and directs transaction management information generation part 120 to generate transaction management information (step S124). Also, order management part 118 receives user's confirmation for the order, and when a permission to order to the upstream side is obtained (step S125: YES), turns on the orderable flag of the transaction management information (step S126).

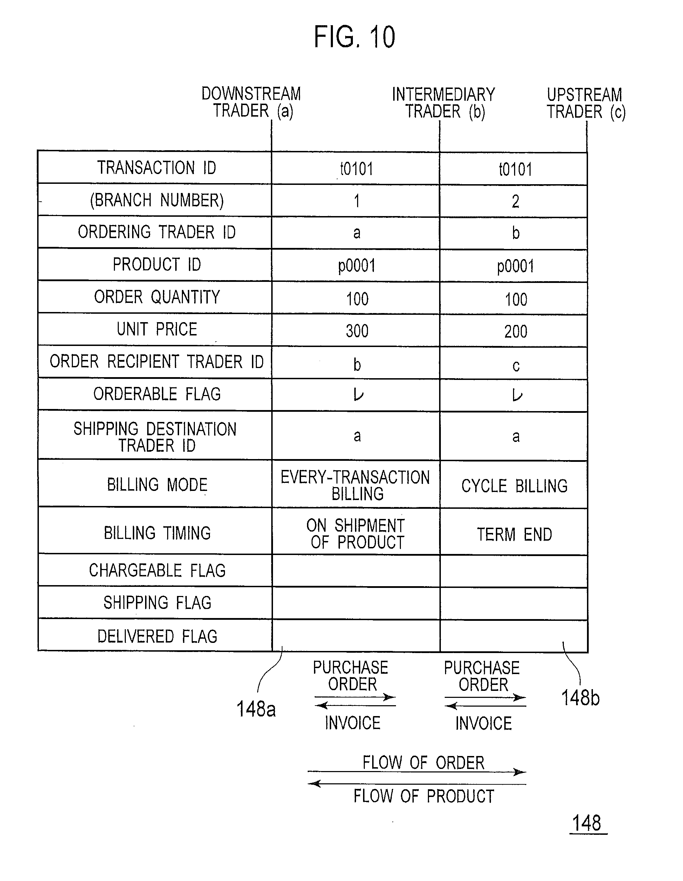

Fig. 10 schematically illustrates first transaction management information 148a on a downstream trader (ID "a") and an intermediary trader (ID "b"), and second transaction management information 148b on an intermediary trader (ID "b") and an upstream trader (ID "c"). Here, as described with reference to Fig. 5, an order of a product is placed from a trader identified with the trader ID "a" to a trader identified with the trader ID "b". Since the trader identified with the trader ID "b" just acts as an intermediary trader, subsequent ordering of the product from the trader identified with the trader ID "b" to a trader identified with the trader ID "c" is performed automatically, and the product is shipped from the trader identified with the trader ID "c" directly to the trader identified with the trader ID "a".

Here, information on the ordering trader ID field, product ID field, order quantity field, and unit price field of first transaction management information 148a between the trader ID "a" and the trader ID "b" can be acquired from order information received by order management part 118. Here, the delivery destination trader ID is "a". In this embodiment, same information on first transaction management information 148a is entered in the product ID field and order quantity field in second transaction management information 148b between the trader ID "b" and the trader ID "c". Information on the order recipient trader ID field in first transaction management information 148a is entered in the ordering trader ID field of second transaction management information 148b.

In this example, as described with reference to Fig. 5, the product distribution mode of the trader identified with the trader ID "b" is "direct delivery". Therefore, order management part 118 sets a delivery destination trader ID set in transaction management information downstream the orderer, or "a", as the delivery destination ID.

### (Shipment/delivery processing)

Next, shipment/delivery processing procedure in transaction management system 10 according to this embodiment is described. Referring back to Fig. 2, delivery management part 126 receives entry of shipment completion information from an order recipient trader when the trader has shipped the ordered product. Specifically, delivery management part 126 receives, as shipment completion information, the transaction ID and the trader ID of the said trader from the said trader. Based on the transaction ID and the trader ID, delivery management part 126 turns on the shipped flag in the shipped flag field of corresponding transaction management information of transaction management information storage part 148.

Delivery management part 126 determines with reference to relevant transaction management information based on the transaction ID and the trader ID whether transaction management information in which a shipping destination trader ID same as a shipping destination trader ID of the transaction management information is designated as a shipping destination exists on further downstream side. When there is transaction management information on the downstream side in which the same shipping destination trader ID is designated as the shipping destination, delivery management part 126 turns on the shipped flag of the transaction management information a well.

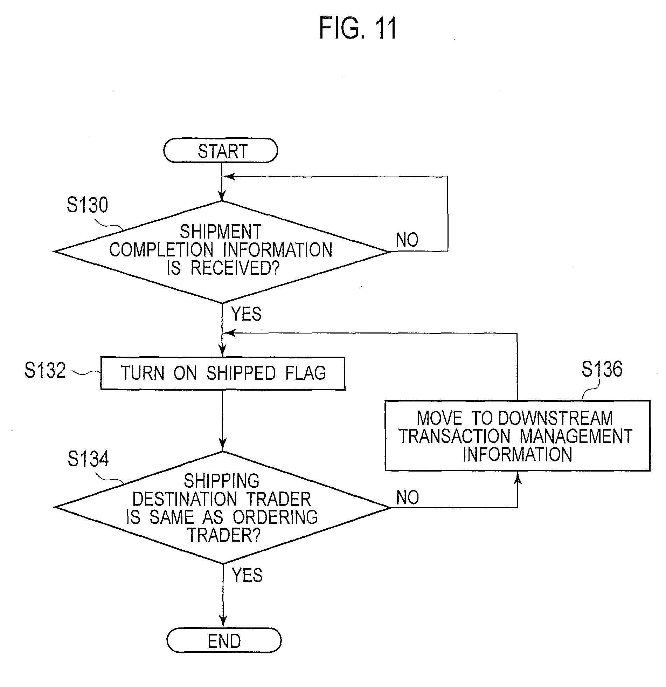

Fig. 11 is a flowchart illustrating an example of a processing procedure when delivery management part 126 turns on the shipped flag of transaction management information storage part 148. For example, an upstream trader shipping the product can enter information into transaction management system 10 from a user terminal such as user terminal 40 via network 50. Delivery management part 126 receives entry of the trader ID of the upstream trader and the transaction ID as well as shipment completion information indicating that the product has been shipped (step S130: YES). Delivery management part 126 accesses transaction management information storage part 148, and based on the transaction ID and the trader ID, turns on the shipped flag of transaction management information in which the trader ID of the upstream trader is the order recipient (step S132).

Subsequently, delivery management part 126 accesses transaction management information storage part 148, and determines whether the shipping destination trader ID of transaction management information in which the trader ID of the upstream trader is the order recipient is same as the ordering trader ID (step S134). Here, when the shipping destination trader ID and the ordering trader ID are not identical with each other (step S134: NO), delivery management part 126 moves to downstream transaction management information, turns on the shipped flag of the transaction management information, and repeats same processing. On the other hand, when the shipping destination trader ID and the ordering trader ID are same with each other at the step S134 (step S134: YES), the process ends.

For example, in the example described with reference to Fig. 10, the shipping destination ID is "a", while the ordering trader ID of second transaction management information 148b between the trader ID "b" and the trader ID "c" is "b". Therefore, the shipping destination ID and the ordering trader ID are different from each other. For this reason, after turning on the shipped flag of second transaction management information 148b, delivery management part 126 also turns on the shipped flag of first transaction management information 148a on the downstream side. Here, the ordering trader ID of first transaction management information 148a between the trader ID "a" and the trader ID "b" is "a", while the shipping destination trader ID is also "a". Therefore, these IDs are same with each other. Therefore, delivery management part 126 ends processing of turning on the shipped flag. Through such processing, when the product is not shipped to the intermediary trader, but shipped from the upstream trader directly to the downstream trader, the shipped flag of first transaction management information 148a is turned on at the same time when the shipment completion information is entered by a trader identified with the trader ID "c" who is an upstream trader without entry of the shipment completion information by a trader identified with the trader ID "b" who is the intermediary trader.

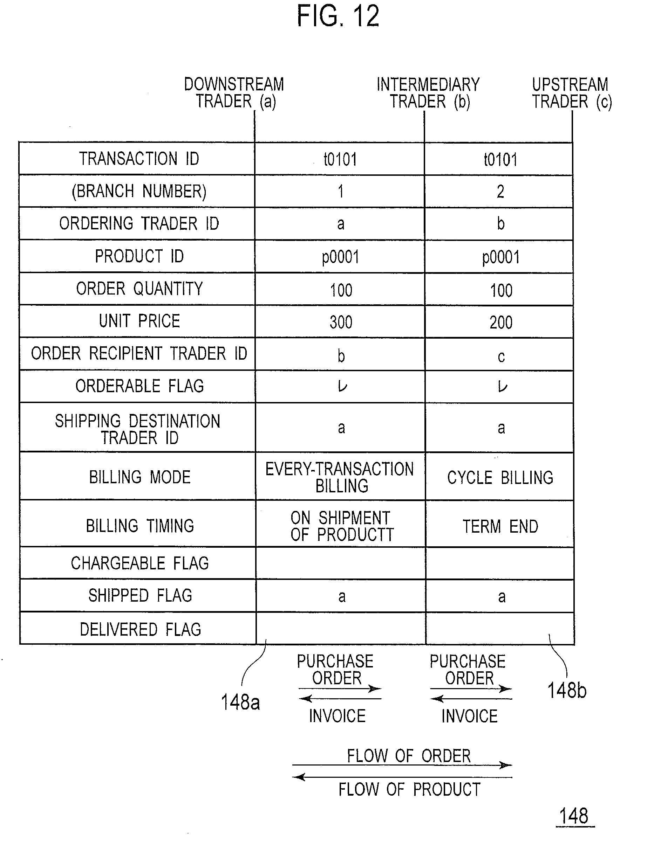

This status is illustrated in Fig. 12. In this embodiment, delivery management part 126 can use the trader ID of a trader to whom the product is shipped, as a shipped flag to turn on the flag. Here, since the product is shipped from a trader identified with the trader ID "c" to a trader identified with the trader ID "a", the trader ID "a" is stored as the shipped flag in transaction management information storage part 148.

Delivery management part 126 receives entry of delivery completion information from a relevant trader when the product is delivered to a trader who is the orderer. Specifically, delivery management part 126 receives, as delivery completion information, indication of delivery completion, transaction ID, transaction ID of the relevant trader, and the trader ID of a trader who has shipped the product. Based on the transaction ID and the trader ID, delivery management part 126 turns on the delivered flag in the delivered flag field of relevant transaction management information of transaction management information storage part 148.

Delivery management part 126 determines with reference to relevant transaction management information based on the transaction ID and the trader ID whether transaction management information in which a shipping destination trader ID same as a shipping destination trader ID of the transaction management information is designated as a shipping destination exists on further upstream side. When there is transaction management information on the upstream side in which the same shipping destination trader ID is designated as the shipping destination, delivery management part 126 turns the delivered flag of the transaction management information a well.

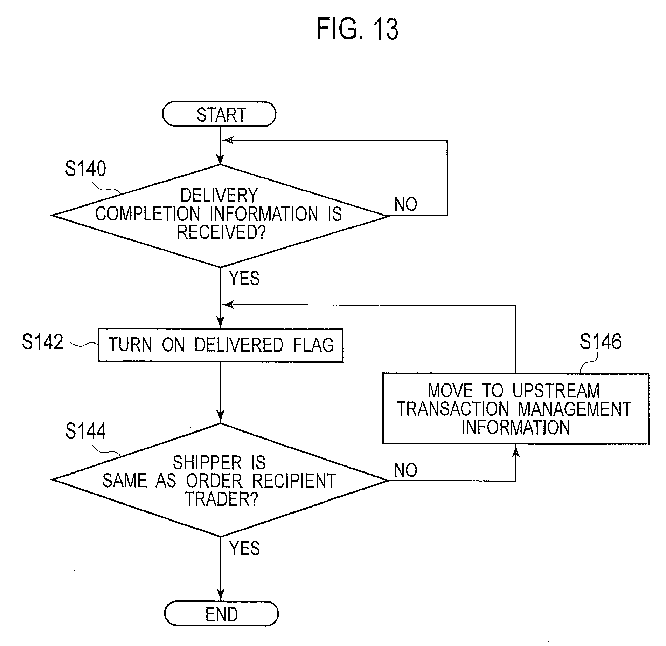

Fig. 13 is a flowchart illustrating an example of a processing procedure when delivery management part 126 turns on the delivered flag of transaction management information storage part 148. For example, a downstream trader to whom the product is delivered can enter information into transaction management system 10 from a user terminal such as user terminal 40 via network 50. Delivery management part 126 receives entry of the trader ID of the downstream trader and the transaction ID as well as delivery completion information indicating that the product has been delivered (step S140: YES). Here, delivery completion information may include the transaction ID of a trader who has shipped the product. Delivery management part 126 accesses transaction management information storage part 148, and based on the transaction ID and the trader ID, turns on the delivered flag of transaction management information in which the downstream trader is the orderer (step S142).

Subsequently, delivery management part 126 accesses transaction management information storage part 148, and determines whether the order recipient trader ID of transaction management information in which the trader ID of the downstream trader is the orderer is same as the transaction ID of a trader who as shipped the product (step S144). Here, when the order recipient trader ID and the trader ID of a trader who shipped the product are not identical with each other (step S144: NO), delivery management part 126 moves to upstream transaction management information, turns on the delivered flag of the transaction management information (step S132), and repeats same processing. On the other hand, when the order recipient trader ID and the trader ID of a trader who shipped the product are same with each other at the step S144 (step S144: YES), the process ends.

For example, in the example described with reference to Fig. 10, when product is shipped from a trader identified with the trader ID "c" who is an upstream trader, the order recipient trader ID in first transaction management information 148a between the trader ID "a" and "b" is "b", while the trader ID of a trader who shipped the product is "c". Therefore, these are different from each other. For this reason, after turning on the delivered flag of first transaction management information 148a, delivery management part 126 also turns on the delivered flag of second transaction management information 148b on the upstream side. Here, the order recipient trader ID of second transaction management information 148b between the trader ID "b" and the trader ID "c" is "c", while the trader ID of a trader who shipped the product is also "c". Therefore, these are same with each other. Therefore, delivery management part 126 ends processing of turning on the delivered flag. Through such processing, when the product is shipped from the upstream trader directly to the downstream trader but not to the intermediary trader, the delivered flag of second transaction management information 148b can be turned on just by entering the delivery completion information by a trader identified with the trader ID "a" who is a downstream trader without entry of the delivery completion information by a trader identified with the trader ID "b" who is the intermediary trader.

### (Document issuance processing)

Next, a document issuance processing procedure in transaction management system 10 according to this embodiment is described. Slip issuance processing part 122 issues the purchase order from the product orderer to the order recipient, and the invoice (bill slip) and delivery statement (delivery slip) from the product order recipient to the orderer. Slip issuance processing part 122 can issue the purchase ledger of the downstream trader who orders the product, and the sales ledger of a trader who receives order of the product. Slip information storage part 150 may store data necessary for issuing slips such as formats of the purchase order, delivery slip, invoice, purchase ledger, and sales ledger.

Slip issuance processing part 122 issues the purchase order from the orderer to the order recipient based on the order quantity and the sales price by order recipient for an order received by order management part 118. In this embodiment, price storage part 146 stores a first sales price which is a product sales price by an upstream trader identified with the upstream trader ID in association with the product ID and the upstream trader ID, and a second sales price which is a product sales price by an intermediary trader in association with the product ID and the intermediary trader ID. Slip issuance processing part 122 issues an order slip from the downstream trader to the intermediary trader based on the order quantity received by order management part 118 and the second sales price, and issues an order slip from the intermediary trader to the upstream trader based on the order quantity received by the order management part 118 and the first sales price. When order management part 118 determines that ordering to the upstream side is necessary, slip issuance processing part 122 also issues a purchase order to a next upstream order recipient based on the order quantity received by order management part 118 and the first sales price by the upstream trader.

Slip issuance processing part 122 issues an invoice or a delivery slip to the downstream side based on sales quantity and sales price used for issuing the purchase order. In this embodiment, the invoice of the delivery slip between same traders is issued by using same data. That is, in this embodiment, slip issuance processing part 122 issues a purchase order for providing to an upstream trader based on a format of the purchase order by using data including the sales quantity and sales price, and issues an invoice of a delivery slip for providing to a downstream trader based on a format of the invoice of delivery slip. Thus, for example, when the orderer places an order to an order recipient and issues a purchase order based on data entered as the order, the invoice or delivery slip from the orderer to the order recipient can be issued by using same data.

Similarly, in this embodiment, the purchase ledger and sales ledger between same traders is issued by using same data. In this embodiment, slip issuance processing part 122 can generate the purchase ledger or the sales ledger formed by accumulating information used for issuance of the order slip. Specifically, slip issuance processing part 122 can store transaction management information among traders by accumulation for a predetermined period. Slip issuance processing part 122 can issue a purchase ledger according to a purchase ledger format for providing to a downstream trader on the side order the product based on the transaction between the traders by using such accumulated data of transaction management information. When issuing such a purchase ledger, slip issuance processing part 122 can concurrently issue a sales ledger according to a sales ledger format for providing to an upstream trader on the side receiving the order of the product based on the transaction between the traders by using same accumulated data.

Here, issuing a slip means that the slip can be viewed by the said traders. Slip issuance processing part 122 performs processing to enable a relevant trader to view documents such as the purchase order, invoice and delivery statement when the orderable flag, shipped flag or delivered flag of transaction management information storage part 148 of any trader is turned on by order management part 118 or delivery management part 126.

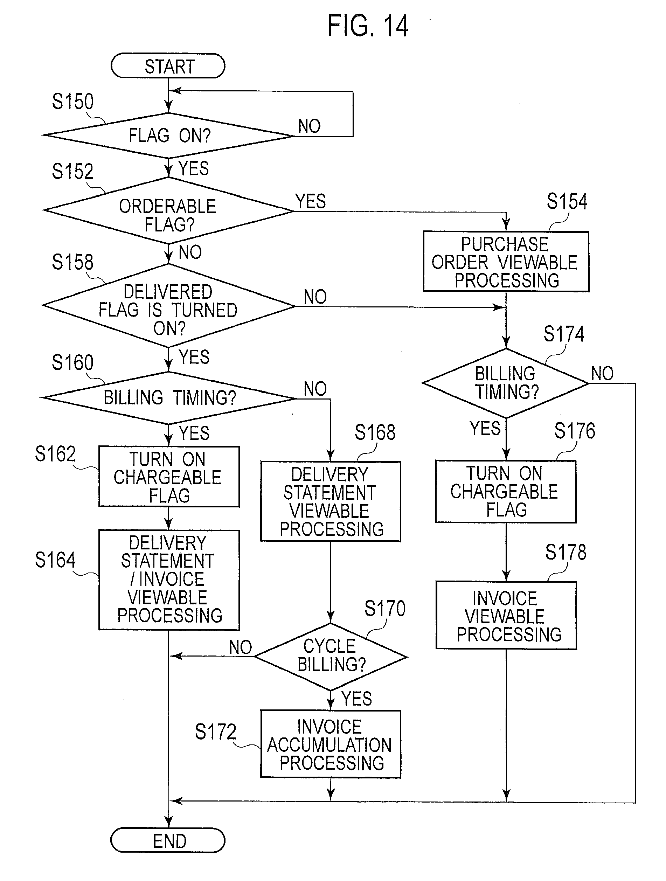

Fig. 14 is a flowchart illustrating an example of a processing procedure of slip issuance processing part 122. When having turned on the orderable flag of transaction management information in transaction management information storage part 148, order management part 118 notifies the transaction ID (and branch number, if any) and turning-on of the orderable flag to slip issuance processing part 122. When having turned on the shipped flag or the delivered flag of transaction management information in transaction management information storage part 148, delivery management part 126 notifies the transaction ID (and branch number, if any) and turning-on the shipped flag or delivered flag to slip issuance processing part 122.

When notified by order management part 118 or delivery management part 126 that the orderable flag, shipped flag, or delivered flag has been turned on (step S150: YES), slip issuance processing part 122 performs processing according to the type of flag turned on.

Slip issuance processing part 122 determines whether the flag is the orderable flag (step S152). If determined that the flag is the orderable flag (step S152: YES), slip issuance processing part 122 performs processing so that a purchase order issued on the basis of transaction management information identified with the transaction ID can be viewed by a trader identified with the order recipient trader ID (step S154). If processed to be viewable, for example, when the said trader logs in by entering an ID thereof, slip issuance processing part 122 can control so that the slip is displayed on a log-in screen of the trader.

In this embodiment, as described at steps S118 and S106 in Fig. 8, when ordering to the upstream trader is performed automatically, the orderable flag is also turned on when transaction management information is generated. Consequently, immediately after order management part 118 receives an order from the downstream trader, slip issuance processing part 122 can make purchase orders from the downstream trader and the intermediary trader viewable by the intermediary trader and the intermediary trader respectively. Thus, a trader on an upstream side identified with the trader ID "c" can view the purchase order without processing by a trader identified with the trader ID "b", who is an intermediary trader.

Subsequent to the step S154, slip issuance processing part 122 determines with reference to the billing timing of transaction management information identified with the transaction ID whether "upon order of product" is set as the billing timing (step S174). Here, when "upon order of product" is set as the billing timing (step S174: YES), slip issuance processing part 122 turns the chargeable flag of the transaction management information on (step S176). Next, slip issuance processing part 122 performs processing so that the invoice generated on the basis of transaction management information identified with the transaction ID can be viewed by a trader identified with the ordering trader ID (step S178).

If, at the step S152, the flag is not the orderable flag (step S152: NO), slip issuance processing part 122 determines whether the flag is the delivered flag (step S158). When the flag is the delivered flag (step S158: YES), slip issuance processing part 122 determines with reference to the billing timing of transaction management information identified with the transaction ID whether "upon delivery of product" is set as the billing timing (step S160). Here, when "upon delivery of product" is set as the billing timing (step S160: YES), slip issuance processing part 122 turns the chargeable flag of the transaction management information on (step S164). Next, slip issuance processing part 122 performs processing so that the delivery slip and invoice generated on the basis of transaction management information identified with the transaction ID can be viewed by a trader identified with the ordering trader ID (step S164). At that time, slip issuance processing part 122 can generate a delivery slip usable as an invoice.

On the other hand, if, at the step S160, "upon delivery of product" is not set as the billing timing (step S160: NO), slip issuance processing part 122, performs processing so that a delivery slip generated on the basis of transaction management information identified with the transaction ID can be view by a trader identified with the ordering trader ID (step S168).

Next, slip issuance processing part 122 determines based on the ordering timing of transaction management information identified with the transaction ID whether cycle billing such as, for example, term end and month end is set as the billing timing (step S170). When the cycle billing is set (step S170: YES), slip issuance processing part 122 performs processing to accumulate transaction management information identified with the transaction ID as accumulated information on the invoice in, for example, slip information storage part 150 (step S172). Slip issuance processing part 122 can provide accumulated information on the invoice accumulated in slip information storage part 150 to a relevant trader at the set timing in a viewable manner for example in response to user's direction at a timing such as, for example, the term end or by monitoring the timing such as the term end.

Even if the flag turned on at the step S152 is not the orderable flag (step S152: NO), the flag could be the shipped flag if not the delivered flag at the step S158 (step S158: NO). In this case, the process also proceeds to the step S174, and slip issuance processing part 122 determines with reference to the billing timing of transaction management information identified with the transaction ID whether "upon shipment of product" is set as the billing timing (step S174). Here, when "upon shipment of product" is set as the billing timing (step S174: YES), slip issuance processing part 122 turns the chargeable flag of the transaction management information on (step S176). Next, slip issuance processing part 122 performs processing so that the invoice generated on the basis of transaction management information identified with the transaction ID can be viewed by a trader identified with the ordering trader ID (step S178).

As described above, according to slip issuance processing part 122 in this embodiment, when any of the orderable flag, shipped flag or delivered flag is turned on, a relevant trader can view the purchase order, invoice, delivery slip and so on the billing mode or the billing timing set in transaction setting information storage part 144. As described above, when the product is shipped from the upstream trader directly to the downstream trader but not to the intermediary trader, delivery management part 126 perform processing so that the shipped flag of transaction management information for transaction between the intermediary trader and the downstream trader is turned on at the same time when the upstream trader enters the shipped information but without entry of the shipped information by the intermediary trader. In such a case, delivery management part 126 can perform processing so that the delivered flag of transaction management information for a transaction between the intermediary trader and the upstream trader can be turned on at the same time when the downstream trader enters the delivered information but without entry of the delivered information by the intermediary trader. Thus, subsequently after the shipped flag or the delivered flag is turned on in such a case, slip issuance processing part 122 can automatically issue the purchase order, invoice, and delivery slip at an appropriate timing.

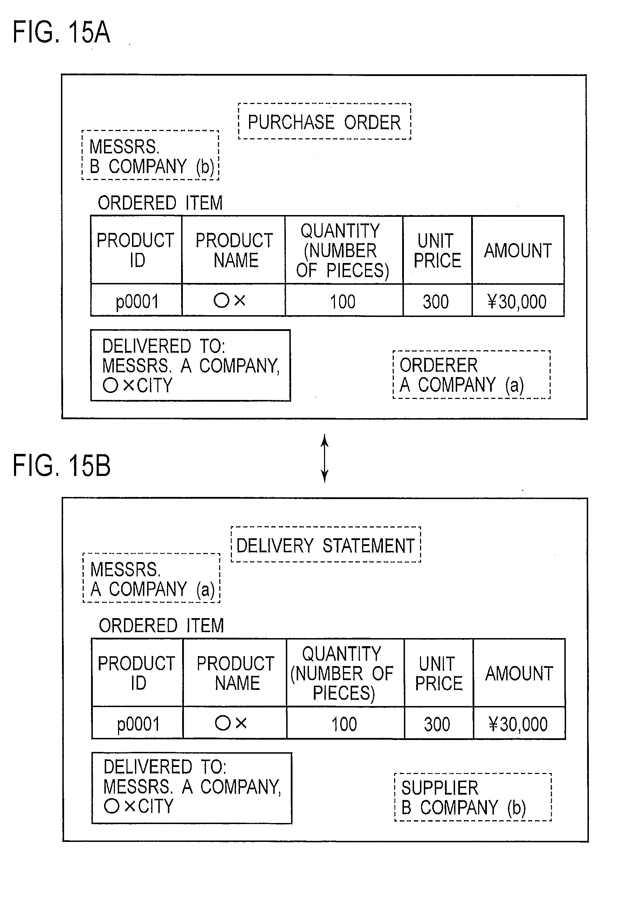

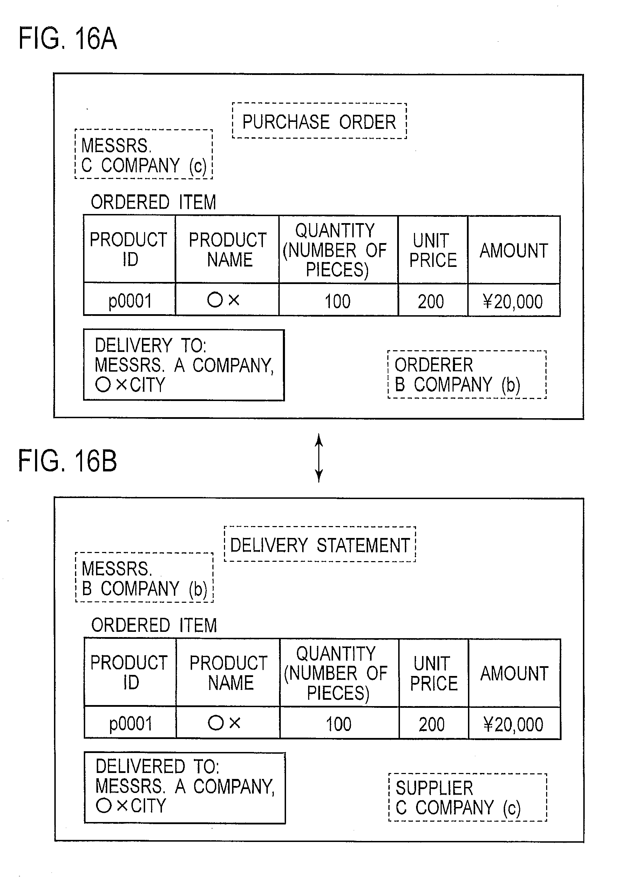

Next, figures of a purchase order and a delivery slip generated by slip issuance processing part 122 are illustrated. Fig. 15 and Fig. 16 schematically illustrate the purchase order and the delivery slip. Fig. 15 (a) illustrates a purchase order provided by "Company A" identified with the trader ID "a" to "Company B" identified with the trader ID "b". Fig. 15 (b) illustrates a delivery slip provided by "Company B" identified with the trader ID "b" to "Company A" identified with the trader ID "a". Here, information contained in the purchase order and the delivery step is same except portions indicated with dotted lines.

Similarly, Fig. 16 (a) illustrates a purchase order provided by "Company B" identified with the trader ID "b" to "Company C" identified with the trader ID "c". Fig. 16 (b) illustrates a delivery slip provided by "Company C" identified with the trader ID "c" to "Company B" identified with the trader ID "b". Here, information contained in the purchase order and the delivery statement is same except portions indicated with dotted lines.

As described above, by registering, in a system, such information on product as the upstream trader from whom a user purchase the product, and the sales price at which the upstream trader sells the product, when an order is placed by any trader (downstream trader) and there is no difference in the order quantity of the ordered product among traders, not only a purchase order from the trader to an order recipient trader (intermediary trader) but also a purchase order from the order recipient trader to a further upstream trader (upstream trader) can be generated automatically. The invoice or the delivery slip can be easily provided as well since data used for a purchase order provided to an upstream trader among traders can be used as data for an invoice or a delivery slip provided to a downstream trader among traders.

Next, processing of distribution state management part 128 is described. Referring back to Fig. 2, distribution state management part 128 accesses transaction management information of transaction management information storage part 148, and manages and provide predetermined traders with information as to whether the product has been shipped to a further downstream side from a downstream trader after the product has been delivered from the upstream trader to the downstream trader. Thus, an upstream trader can figure out shipment status of the product on the downstream side, and forecast next orders of the product from downstream traders.

For example, in the example described with reference to Fig. 12, distribution state management part 128 can indicate, to a trader identified with the trader ID "c" who shipped the product, whether an order of the product is placed by a further downstream trader to a trader identified with the trader ID "a" who shipped the product, and the quantity if the order is placed.

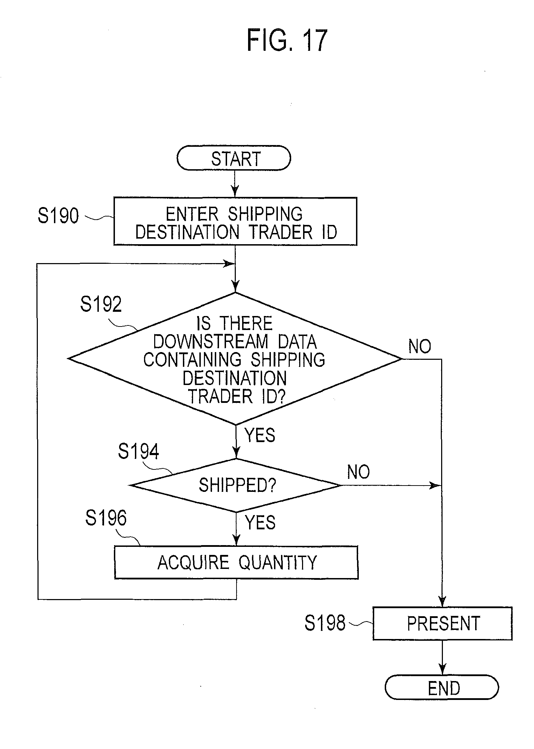

Fig. 17 is a flowchart illustrating a processing procedure for distribution state management part 128 offering the quantity of product shipped by a downstream trader. When the user logs in and enters the transaction ID which has been entered in the shipping destination trader ID field in an upstream transaction (step S190), distribution state management part 128 determines whether there is transaction management information containing the shipping destination trader ID as the order recipient trader ID (step S192). When there is transaction management information containing the shipping destination trader ID as the order recipient trader ID (step S192: YES), distribution state management part 128 determines from the transaction management information whether the product has been shipped (step S194). When the product has been shipped (step S194: YES), distribution state management part 128 acquires the order quantity thereof (step S196). The process returns to the step S192 and repeats the same processing. Thereafter, distribution state management part 128 offers the acquired order quantity to the trader (step S198).

As described above, by figuring out the quantity of product shipped from a trader who is an orderer of their product to a further downstream trader, an upstream trader can forecast, for example, possibility of orders from downstream traders when there is a decrease in the stock quantity of the downstream trader. This enables the upstream trader may perform ordering to a further upstream side or the like at an appropriate timing.

Although the step S194 determines whether the product has been shipped, determination as to whether the order has been received can be made. When presenting such order quantity to a trader, distribution state management part 128 performs user authentication based on the transaction ID of the user so as to present only information relating to an orderer of the transaction in which the user is designated as the order recipient.

As illustrated in Fig. 12, in this embodiment, transaction management information storage part 148 stores the product ID of the said product, the trader ID of the product orderer, the trader ID of order recipient selling the said product to the said orderer, the transaction ID of the shipping destination shipping the said product to the said order recipient, the order quantity, and the shipping status of the product to the shipping destination, for each transaction based on the product order. The shipping status of the product may be figured out from flags in the orderable flag field, shipped flag field, and delivered flag field.

Therefore, in transaction management system 10 according to this embodiment, the quantity of product shipped from a trader to a downstream trader can be figured out based on, for example, the shipped flag (or orderable flag) and the shipped quantity by referring to transaction management information of transaction management information storage part 148. In response to an inquiry for the stock quantity of product in a inquiry target trader designated with the trader ID of said trader as well as the trader ID and product ID, distribution state management part 128 accesses transaction management information storage part 148, and calculates and presents the stock quantity of the product in the said inquiry target trader by subtracting an order quantity in transaction management information in which the said inquiry target trader is registered as the order recipient from an order quantity in transaction management information in which the said inquiry target trader is registered as the orderer and the order recipient.

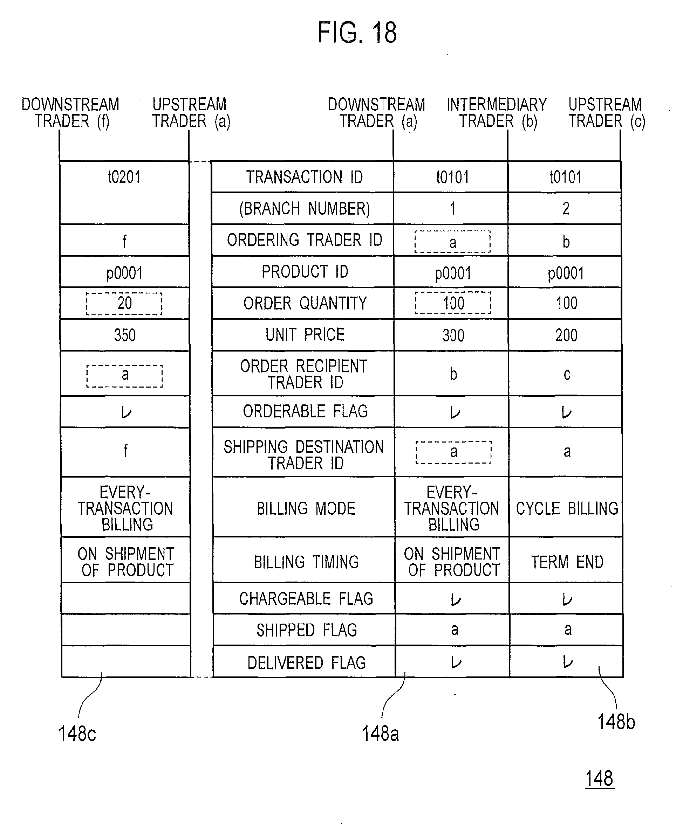

Fig. 18 illustrates an example of data configuration of transaction management information storage part 148 in first transaction management information 148a and second transaction management information 148b illustrated in Fig. 12 when a trader of the transaction ID "a" as the downstream trader performs a new transaction for an order of a product received from further downstream side.

Here, assume that a trader identified with the transaction ID "a" receives, for example, an order of product identified with the product ID "p0001" of the order quantity "20" from a trader identified with the trader ID "f". In this case, transaction management information generation part 120 generates third transaction management information 148c having a new transaction ID, and stores in transaction management information generation part 148 by adding the new transaction ID "t0201".

In case that such a third transaction management information 148c has been generated, in response to an inquiry for the stock quantity of product in a inquiry target trader designated with the trader ID of said trader as well as the trader ID "a" and product ID "p0001", distribution state management part 128 accesses transaction management information storage part 148, and calculates the stock quantity of the product in the inquiry target trader identified with the trader ID "a" is "80" by subtracting the order quantity "20" in third transaction management information 148c in which the said inquiry target trader is registered as the order recipient from the order quantity "100" in first transaction management information 148a in which the said inquiry target trader is registered as the orderer and the order recipient, and presents to the user of transaction management system 10.

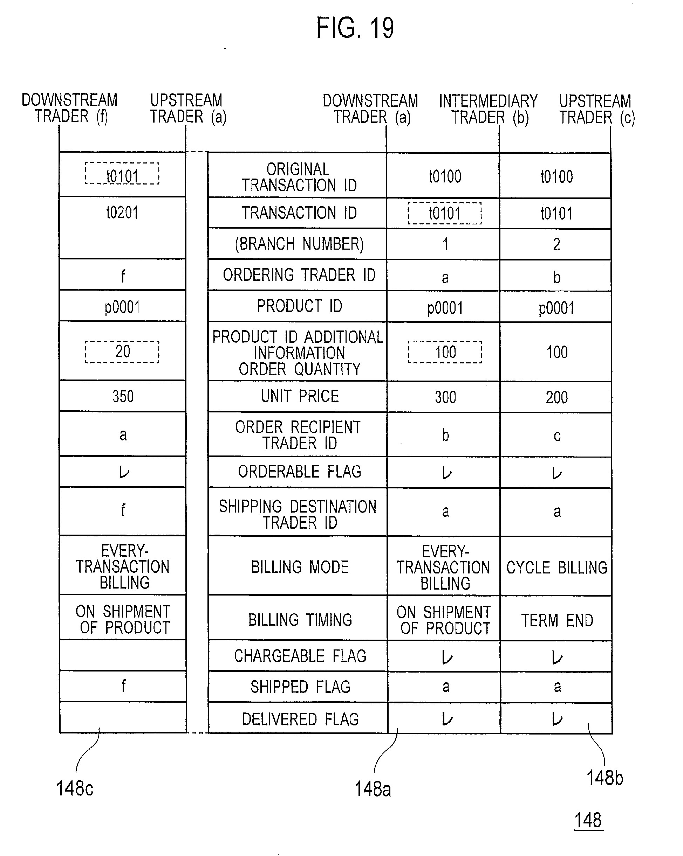

Fig. 19 illustrates another example of data configuration of a transaction management information storage part 148 illustrated in Fig. 18.

Here, transaction management information generation part 120 can also store the transaction ID "t0101" of an upstream transaction being the transaction target, as an original transaction ID, in transaction management information storage part 148 in association with respective transaction management information. With such a configuration, distribution state management part 128 can perform management so as to figure out shipping status of a product in a downstream transaction on the basis of the transaction ID of an upstream transaction. Distribution state management part 128 can indicate, to a trader identified with the trader ID "a" to whom the product is shipped, whether the product has been ordered from a further downstream trader, and the order quantity, if any.

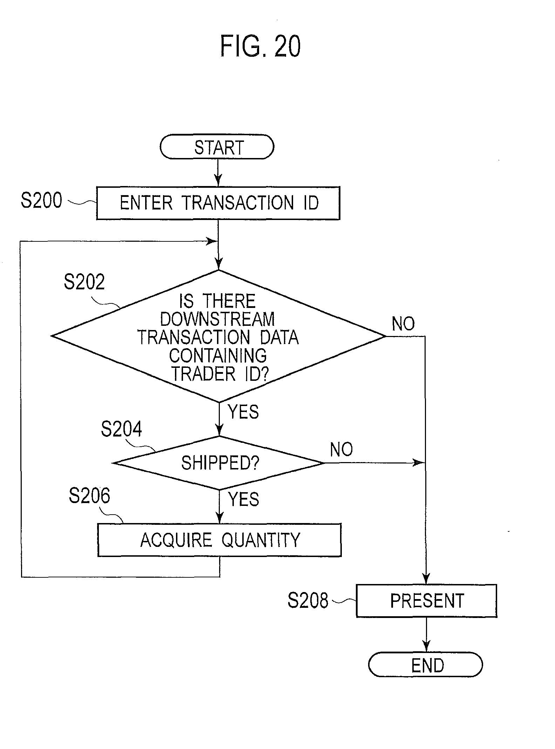

Fig. 20 is a flowchart illustrating a processing procedure for distribution state management part 128 offering the quantity of product shipped by a downstream trader. When the user logs in and enters the transaction ID in an upstream transaction (step S200), distribution state management part 128 determines whether there is transaction management information containing the transaction ID as an original transaction ID (step S202). When there is transaction management information containing the transaction ID as the original transaction ID (step S202: YES), distribution state management part 128 determines from the transaction management information whether the product has been shipped (step S204). When the product has been shipped (step S204: YES), distribution state management part 128 acquires the order quantity thereof (step S206). The process returns to the step S202 and repeats the same processing. Thereafter, distribution state management part 128 displays the acquired order quantity to the trader (step S208).

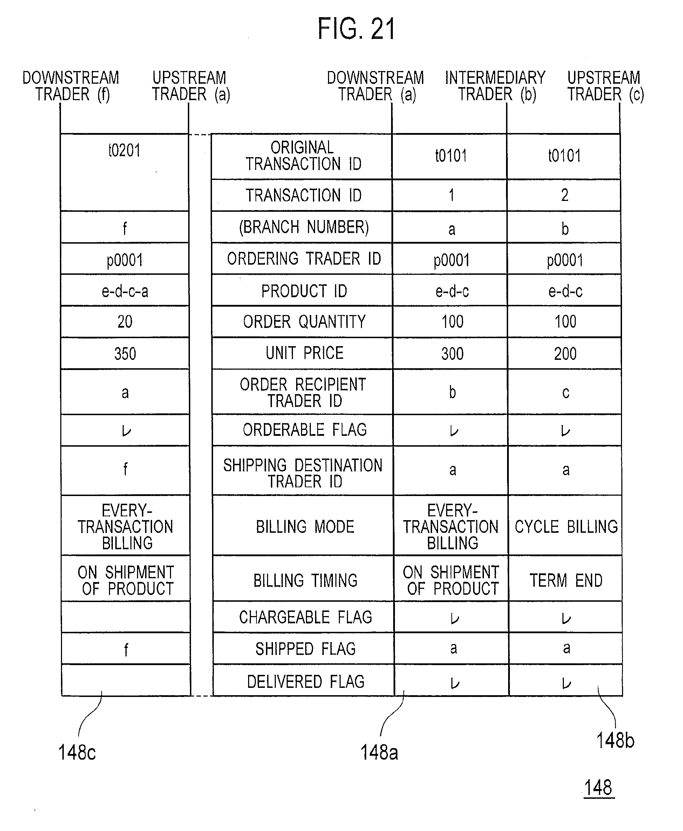

Fig. 21 illustrates another example of data configuration of transaction management information storage part 148 illustrated in Fig. 18 and Fig. 19. Here, transaction management information generation part 120 may be configured to, every time a product is distributed between traders, store the transaction ID of a trader who has distributed the product, in transaction management information storage part 148 as product ID additional information in association with each of product IDs.

In first transaction management information 148a and second transaction management information 148b, "e-d-c" is stored as product ID additional information. This indicates that a product identified with the product ID "p0001" held by a trader identified with the trader ID "c" has been distributed to a trader identified with the trader ID "e", a trader identified with the trader ID "d", and a trader identified with the trader ID "c" in this order. Here, after this product has been shipped from a trader identified with the trader ID "c" to a trader identified with the trader ID "a", the trader ID "a" is added to the transaction management information, and third transaction management information 148c may be configured to store "e-d-c-a " as product ID additional information as shown in the product ID additional information field. With such a configuration, traders involved in a distribution may be easily figured out by verifying respective transaction management information. Although an example of adding only the transaction ID of a trader who has distributed the product is shown here, third transaction management information 148c may be configured to also include the trader ID of a trader of the raw material used for manufacturing the product, as the product ID additional information. In such a case, third transaction management information 148c may be configured to add the transaction ID of a trader who has handled the raw material but not the present product, together with a distinguishable code. Further, it may be configured to add a mark or the like for determining the trader who is an end user. This enables the seller to make analysis of the buyer of their product, and so on.

Further, transaction management information storage part 148 may be configured in such a manner that information of each piece of transaction management information such as, for example, information in the shipping destination trader ID field includes address information of transaction management information storage part 148 in which information on the order recipient trader ID of other related transaction management information is stored. With such a configuration, information on upstream traders and information on downstream traders can be linked with each other, and thereby retrieval processing time for indicating the inventory quantity can be reduced.

When a product is distributed from an upstream trader to a downstream trader based on an order of the product by any trader, distribution state management part 128 adds the trader ID of a trader who has received the product to the end of the product ID additional information, and stores the quantity of the product received by the said trader as an inventory quantity in inventory information storage part 152 in association with the product ID and the product ID additional information. Further, at that time, distribution state management part 128 also updates the inventory quantity by subtracting the shipped quantity of the product from an inventory quantity associated with the product ID and the product ID additional information carrying, at the end thereof, the transaction ID of a trader who has shipped the product.

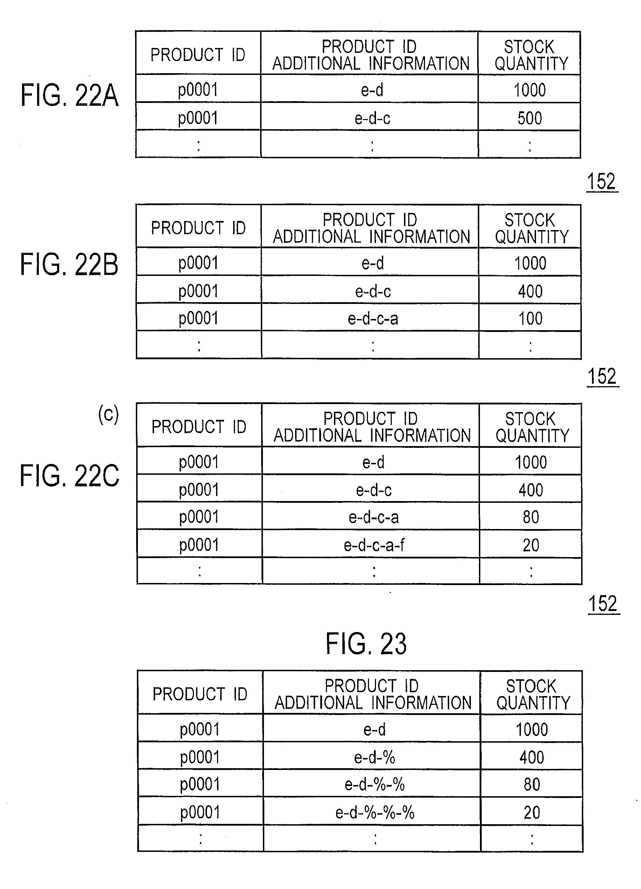

This example is illustrated in Fig. 22. Fig. 22 illustrates an example of data configuration of inventory information storage part 152.

Here, when the delivered flag is turned on with the product delivered to any trader, distribution state management part 128 adds the transaction ID of the trader to product ID additional information so as to update inventory quantity of the delivered product. The example illustrated in Fig. 22(a) illustrates the inventory quantity of product identified with the product ID "p0001", comprising 1,000 per product ID additional information of "e-d", and 500 per product ID additional information of "e-d-c". Here, assume that the order quantity of "100" is ordered from a trader identified with the trader ID "a" to a trader identified with the trader ID "c". Then, assume that the product is shipped from a trader identified with the trader ID "c" to a trader identified with the trader ID "a", and the delivered flag is turned on with the delivered indication given by the trader identified with the trader ID "a". In this case, distribution state management part 128 stores the inventory quantity of "100" in association with new product ID additional information "e-d-c-a" assigned by adding "a" to product ID additional information "e-d-c", and updates the inventory quantity of product ID additional information "e-d-c" to "400" by subtracting "100" from pre-update inventory information of "500". Thus, the inventory quantity of product available from a trader identified with the trader ID post-fixed to the product ID additional information can be easily figured out by referring to inventory information storage part 152.

Fig. 22(c) assumes that the order quantity of "20" is ordered from a trader identified with the trader ID "f" to a trader identified with the trader ID "a". Then, assume that the product is shipped from a trader identified with the trader ID "a" to a trader identified with the trader ID "f", and the delivered flag is turned on with the delivered indication given by the trader identified with the trader ID "f". In this case, distribution state management part 128 stores the inventory quantity of "20" in association with new product ID additional information "e-d-c-a-f" assigned by adding "f" to product ID additional information "e-d-c-a", and updates the inventory quantity of product ID additional information "e-d-c-a" to "80" by subtracting "20" from pre-update inventory information of "100".

Further, distribution state management part 128 can receive, from a trader authenticated with a trader ID thereof, inquiry for distribution status of a transaction shipped downstream by the trader, and provide distribution status of products related to the trader. For example, upon receiving, from a trader identified with the trader ID "e", inquiry of distribution status of product shipped downstream by the said trader, distribution state management part 128 accesses inventory information storage part 152, and extracts information containing the trader ID "e" in the product ID additional information. Distribution state management part 128 can provide the extracted information to a user terminal of the said trader. At that time, distribution state management part 128 does not provide the product ID additional information as is to the user, but can provide to the said trader by converting any trader ID other than a trader ID next to the trader ID of the target trader to an unidentifiable mark (such as, for example, "%"). This enables to figure out inventory status in a distribution channel without identifying the trader. Since traders are not identified, an upstream trader and a downstream trader can easily disclose their own inventory data, and thereby accuracy of demand forecast, delivery forecast, and the like as a whole can be improved.

Description is made with reference to Fig. 23. Here, data other than the transaction ID of a trader identified with the trader ID "e" and the transaction ID of a trader identified with the trader ID "d" who transacts product with the above trader do not represent the trader ID itself, and is indicated with a mark "%". With such a configuration, approximate stock quantity of the product available from a trader with whom direct transaction is not made, such as, for example, traders at downstream stages, can be presented to a trader identified with the trader ID "e", although the trader ID itself or identification information on a trader with whom direct transaction is not made is presented. This prevents trader information from being known to other traders, and enables traders to forecast order reception or plan ordering by figuring out distribution situation of products handled by the traders. Although not shown here, for example, the end user may be displayed together with a code from which the end user is identifiable. However, if agreed by individual traders marked with "%" herein, the trader ID of those traders may be presented to a trader identified with the trader ID "e".

Although embodiments of the invention are described above with reference to the accompanying drawings, those embodiments are illustrative of the invention, and various configurations other than the above may be used.

In the embodiments described above, slip issuance processing part 122 issues the invoice or the delivery slip after issuing the purchase order based on transaction management information, but slip issuance processing part 122 may issue the invoice or the delivery slip solely based on transaction management information. That is, in this embodiment, sales prices among traders can be stored in price storage part 146, and thereby, when an invoice is issued from the upstream side to the downstream side, an invoice to a further downstream side can be automatically issued based on the sales price information in a similar manner as creation of the delivery slip.

In the embodiments described above, all of the downstream trader, intermediary trader and upstream trader are illustrative of traders user-registered as traders in transaction management system 10. However, transaction management system 10 according to this embodiment may apply to a case where the upstream trader is not a user of the transaction management system. When the upstream trader is a user of the system, the order slip is displayed, for example, on a display of a user terminal of the upstream trader, with the system logged in by the upstream trader. Further, electronic product ordering processing to the upstream trader can be performed automatically. Since the order slip is automatically issued even when the upstream trader is not a user of the system, ordering processing can be simply performed by sending the order slip by fax or by attaching to an electronic mail.

Transaction setting information storage part 144 also may be configured to hold the inventory quantity held by a trader in association with the transaction ID of the target trader (corresponding to an intermediary trader) and the product ID. In this case, when product is ordered from the downstream side, order management part 118 can perform processing of subtracting the order quantity from the inventory quantity of transaction setting information storage part 144 based on the order quantity, and changing the salable quantity.

In the embodiments described above, for example, as illustrated in Fig. 5, transaction setting information storage part 144 is configured to store the upstream trader ID and the downstream trader ID in association with trader IDs. However, there is no need to register the upstream trader ID and/or the downstream trader ID as the order recipient to trader IDs for all products. For product which is desired not to be identified with an upstream trader or a downstream trader, a code indicating no-identification, such as, for example, "all" may be registered.

### (Second embodiment)

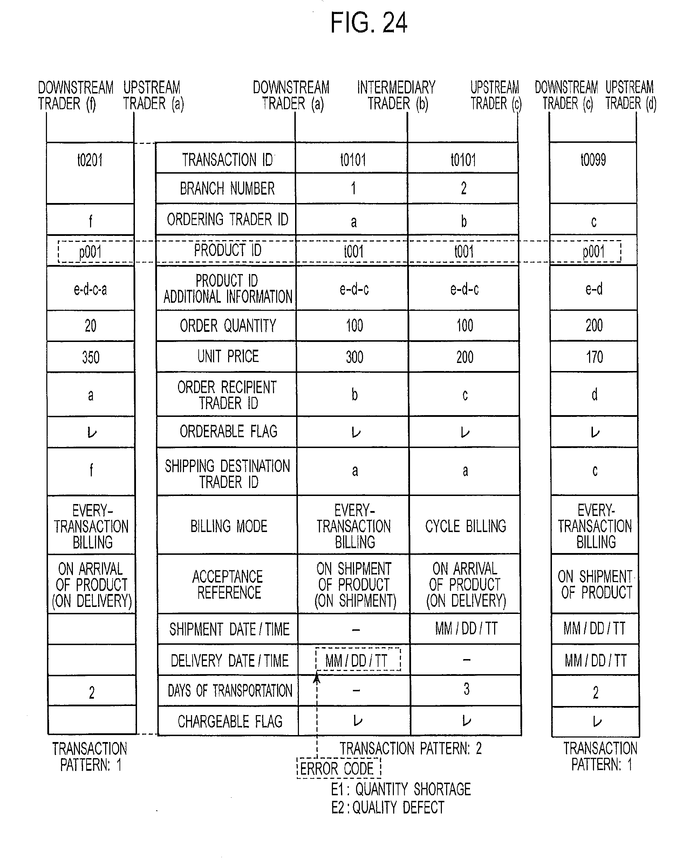

Next, a second embodiment according to the invention is described. In this embodiment, configuration of transaction management information storage part 148 is modified as illustrated in Fig. 24 from the first embodiment in such a manner that on-shipment or on-delivery can be managed as a reference for delivered-product acceptance (acceptance reference), delivery management part 126 sets the chargeable flag based on the acceptance reference, and slip issuance processing part 122 outputs the invoice and the like based on the chargeable flag.

Hereinafter, description is focused on differences from the first embodiment. Features not referred to in the description of this embodiment are same as those of the first embodiment.

### (Date configuration of transaction management information storage part 148)

Similarly with the first embodiment, in transaction management system 10 according to this embodiment, a pattern (transaction pattern) is formed by end users including a product recipient (including an expected recipient) and a product shipper (including an expected shipper), and a predetermined number of transaction traders inserted therebetween, and on which basis, transaction management information storage part 148 is configured to manage billing and delivery and perform product distribution management.

Fig. 24 illustrates an example of data configuration of transaction management information storage part 148 according to this embodiment. In this example, transaction pattern 1 is a pattern of a transaction between two parties including a downstream trader as a product recipient and an upstream trader as a product shipper, and transaction pattern 2 is a pattern of a transaction in which one intermediary trader as an ordering broker is involved. The number of patterns depends on the number of intermediary traders.

Major differences from Fig. 21 and Fig. 24 are that the billing timing, shipped flag and delivered flag illustrated in Fig. 21 are changed to the acceptance reference, shipment date/time, and delivery date/time respectively, and the days of transportation field is newly provided.

The days of transportation is the number of days taken to transport the product from the upstream trader to the downstream trader. Default is set with a predetermined initial value in advance.

Next, processing of delivery management part 126 using data of transaction management information storage part 148 is described with reference to the accompanying drawings. Transaction management information storage part 148 comprises a shipping start-up routine which is activated with a transaction ID sent from a user terminal of the upstream trader, and shipment completion notice including shipment date/time, and a fixed cycle start-up routine activated at a fixed cycle.

### (Processing procedure of delivery management part 126)

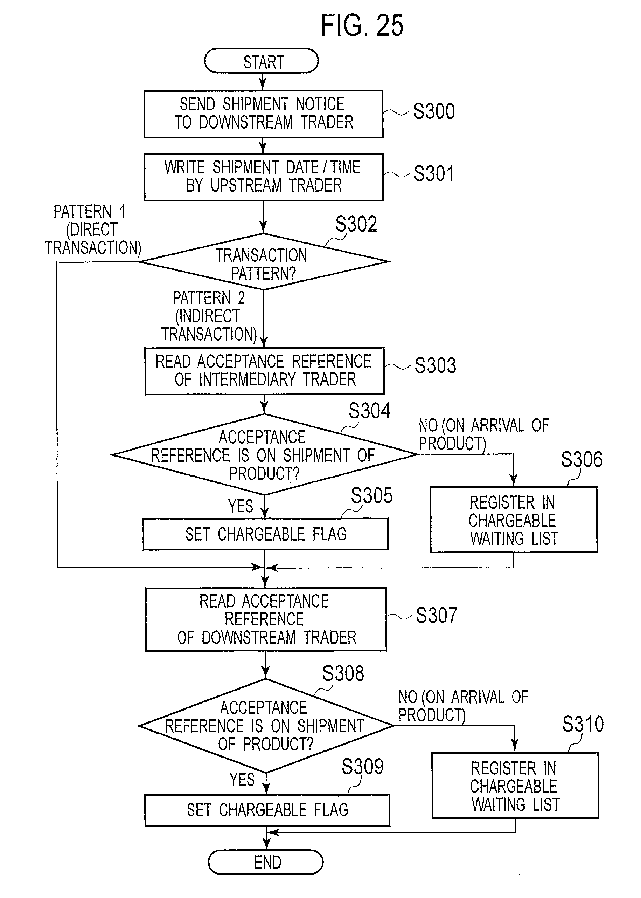

Fig. 25 is a flowchart illustrating a processing procedure of the shipping start-up routine of delivery management part 126. The shipping start-up routine of the delivery management part is activated in response to receipt of the shipment completion notice of the upstream trader as described above.

When activated, this routine firstly sends a shipment notification notifying that the shipment has been completed, together with the trader ID to a downstream trader by mail (S300). The downstream trader means all traders on the downstream side as viewed from an upstream trader in the said transaction ID (same applies to the upstream trader). At the step S300, however, if there is an intermediary trader, the notification may be sent to both the intermediary trader and downstream trader (end trader), or may be sent to the downstream trader only.

Then, delivery management part 126 writes the shipment date/time into the shipment date/time field of transaction management information storage part 148 (S301). Then, delivery management part 126 determines the transaction patter of the said transaction ID (S302). If the pattern is Pattern 2 or if there is an intermediary trader, delivery management part 126 reads the acceptance reference for the intermediary trader (or acceptance reference for transaction between the upstream trader and the intermediary trader) (S303). If the read acceptance reference is on-shipment of product (S304: YES), delivery management part 126 sets the chargeable flag, and if the read acceptance reference is on-arrival (on-delivery) of product (S304: NO), delivery management part 126 registers the transaction ID in the chargeable waiting list (hereafter simply referred to as "waiting list") (S306).

Next, delivery management part 126 reads acceptance reference (or, acceptance reference of transaction between a downstream trader and an immediate upstream trader) (S307), and performs similar processing as above steps S304 to S306 (S308 to S310).

On the other hand, when the pattern determined at the step S302 is Pattern 1, delivery management part 126 immediately shifts to the step S307 and performs subsequent processing. If there are more than three transaction patterns, steps S303 to S306 may be added depending on the number of intermediary traders. The above is a processing procedure of the shipping start-up routine of delivery management part 126.

The downstream trader, who is the designated receiver of the product, enters receipt information via a user terminal upon receipt of the product. At that time, if there is no problem with the received product, the downstream trader sends notice of normal receipt together with the transaction ID to transaction management system 10. On the other hand, if there is a failure with the received product, the downstream trader sends an error code corresponding to the failure to transaction management system 10. Transaction management system 10 stores received information in the delivery date/time field of the relevant transaction ID of transaction management information storage part 148. Failures of the product include, for example, quantity shortage, quality defect of the product, etc.

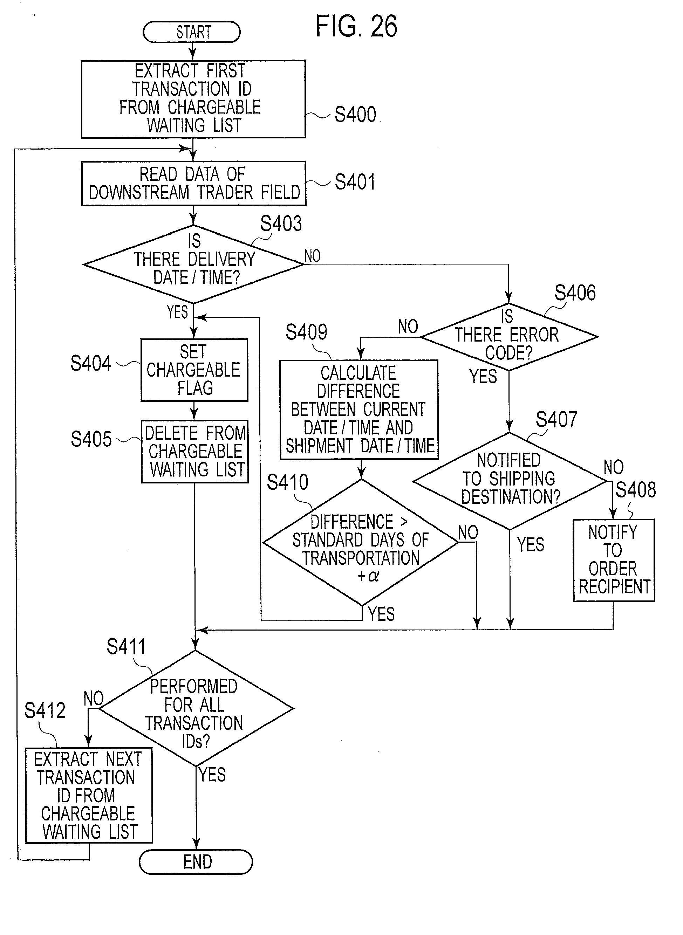

Next, a processing procedure for a fixed cycle start-up routine of delivery management part 126 is described with reference to Fig. 26. When activated periodically, the fixed cycle start-up routine of the delivery management part extracts a first transaction ID registered in the waiting list (S400). Then, the fixed cycle start-up routine reads data in the delivery date/time field of the downstream trader column in transaction management information storage part 148 (S401). If date/time data is saved in the delivery date/time field (S403: YES), the fixed cycle start-up routine sets the chargeable flag in a line where the acceptance reference for the transaction ID is on-delivery of product (S404), and deletes the said transaction ID from the waiting list (S405). On the other hand, when an error code is set at the step S403 (S406: YES), the fixed cycle start-up routine notifies an upstream trader who is a shipping destination (S407). If NO at the step S406 or if neither date/time nor an error code is set in the delivery date/time field, the fixed cycle start-up routine calculates a difference between current data/time and shipment date/time by the upstream trader (S409). If the difference is larger than days of transportation plus α (a predetermined margin) (S410: YES), the process shifts to the step S404. Above processing is performed for all transaction IDs in the waiting list (S411, S412). A step of adding the transaction ID of the relevant downstream trader to product ID additional information for the relevant product ID may be inserted immediately after the step S405. Also, days of transportation calculated by subtracting shipment date/time from delivery date/time may be used as days of transportation between same traders.

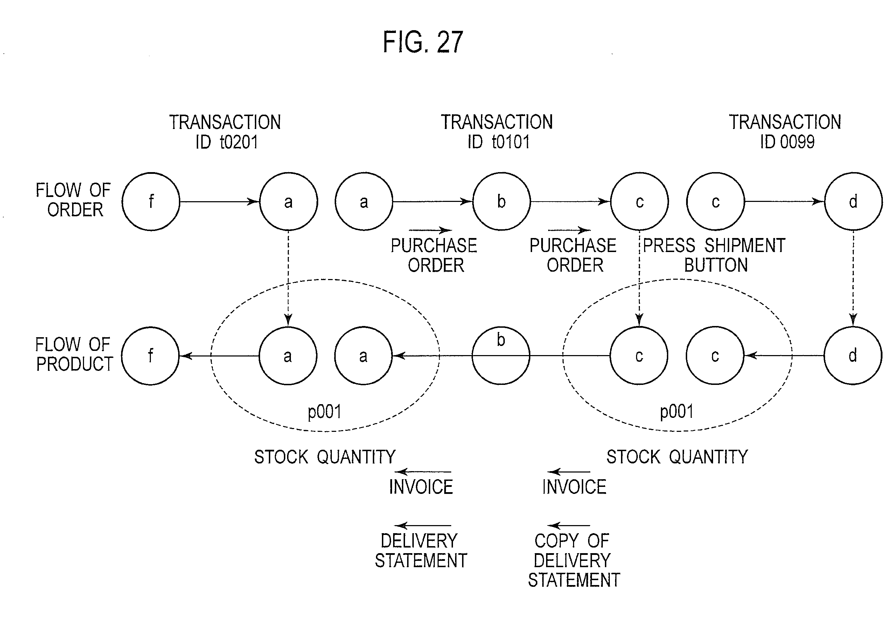

Fig. 27 illustrates a flow of order information and a flow of the product. For example, in the transaction identified with the transaction ID "t0101", order information flows to traders a, b, and c in this order, and the trader "c" (upstream trader) notifies completion of product shipment to transaction management system 10, for example, by pressing a shipment button displayed on a terminal. The product is sent from the trader "c" to the trader "a". Distribution information of the product is saved in transaction management information storage part 148 as product ID additional information. For example, in the example illustrated in Fig. 24, the product sent from the trader "c" is product transacted among traders "e", "d", and "c" in this order. For the trader "a", when the acceptable flag is set to the product sent from the trader "c", identification information on the trader "a" (product recipient) is added to the product ID additional information by transaction management system 10, and thereby the product ID additional information becomes e-d-c-a. With this addition, the product ID additional information serves as distribution traceability information. On the other hand, in a similar case, when the acceptable flag is set to the product sent from the trader "c", identification information on all downstream traders identified with the said transaction ID (including the intermediary trader) as viewed from the upstream trader can be added as well. In this case, the product ID additional information becomes e-d-c-b-a. This serves as delivery traceability information. Since flow of product delivery is, in principle, reverse to flow of ordering (or, order reception as viewed from a party receiving the order), this may be considered as order traceability information as well. By storing both the distribution traceability and delivery (order) traceability, history of the transaction can be traced when a problem occurs in the distribution, and thereby security and safety of the transaction can be made effective.

Thus, based on the product shipment completion notice sent from the trader "c" and data entered by the trader "a" (downstream trader), transaction management system 10 performs acceptance determination, management of product quality, and distribution management in an intensive and efficient manner.

For example, purchase orders and delivery slips illustrated in Fig. 15 and Fig. 16 can be output by using common data stored in transaction management information storage part 148, but the problem is a timing of output. Delivery management part 126 according to this embodiment can set the chargeable flag according to the acceptance reference, and slip issuance processing part 122 can perform issuance processing in an appropriate manner according to the billing mode. Further, utilization of common data, or so-called front-back relation in the transaction may be applied, for example, to the sales ledger and the purchase ledger, but not limited to the purchase order and the delivery slip. However, embodiments of the invention are characterized in that these documents and account data can be created at an appropriate timing by eliminating necessity of entry by downstream traders as described above.

Further, by linking data containing a corresponding product ID and corresponding downstream trader and upstream trader to each other, stock quantities of traders described in connection with the first embodiment can be disclosed to other traders, and thereby demand forecast can be made efficiently. By using the product ID additional information, acceptance and distribution processing can be interlocked to perform distribution management efficiently and accurately.

For example, by enabling a person to see inventory status of upstream traders for a specific product, necessity of ordering and delivery date at the time of ordering can be forecast. On the other hand, by enabling a person to see inventory status of downstream traders for a specific product, order reception can be forecast. Preferably, selection of view/not view inventory status (increase/decrease tendency of stock quantity, and so on), selection of enable/disable to identify trader, or viewable extent of inventory status of upstream or downstream trader is programmable. Further, display style of stock quantity (for example, so-called sensory or analog display such as large or small, or display of increase/decrease tendency by ratio) may be programmable.

According to this embodiment, timing of setting the chargeable flag can be changed according to the acceptance reference. Therefore, in addition to effects of the first embodiment, acceptance and issuance of documents at an appropriate timing and in an efficient manner is enabled, and product quality management and distribution management can be performed efficiently.

For example, in the transaction pattern 2, functions as the escrow can be easily achieved with the intermediary trader as a trader, a party purchasing product by utilizing the site as the downstream trader, product seller providing product information on the site as the upstream trader, "on shipment" as acceptance reference between the downstream trader and the intermediary trader, and "on delivery" as the acceptance reference between the intermediary trader and the upstream trader.

When a failure of the product (quantity shortage or quality defect) is found on delivery of the product, the downstream trader registers the failure so that the intermediary trader can notice and request the upstream trader to resend, prior to the acceptance between the intermediary trader and the upstream trader. Therefore, product quality can be ensured with a simplified database structure.

Transaction may be performed by attaching to the product an identification code such as a bar code comprising by continuously tying the product ID, product lot number (or transaction ID) and product ID additional information, or a QR code (or, registered trade mark) as distribution traceability information, or alternatively by attaching to the product an IC chip in which the traceability information is stored. On shipment of the product, the upstream trader reads the QR code (distribution traceability information) by using a read means such as a QR code reader, and sends to transaction management system 10. Transaction management information storage part 148 is configured to identify the transaction with the transaction ID, or the product ID, lot number (not shown) and product ID additional information. Delivery management part 126 performs setting of the chargeable flag in accordance with a processing procedure illustrated in Fig. 25 and Fig. 26 by identifying the transaction from distribution traceability information sent from the upstream trader. Slip issuance processing part 122 performs processing of issuing the invoice, and so on. Thus, after the product has been shipped, traders can issue documents necessary for the transaction such as the invoice by just reading distribution traceability information accompanying the product, and thereby a substantial labor saving can be achieved. Further, by successively updating distribution traceability information accompanying the product, distribution history of the product can be figured out.

A transaction management system according to the invention can be achieved as a distributed system. For example, when upstream transactions are performed by different servers, distributed processing of data can be achieved through data coordination by performing data conversion of respective data of transaction management information storage part 148 to a data format of the relevant servers.

Although transaction patterns 1 and 2 can be used by combining each other appropriately according to the circumstances of the transaction as described above, the patterns can be used by modifying data structure thereof as appropriate. For example, although in the example of transaction pattern 2 of Fig. 24, the upstream trader (c) sends the ordered product to the downstream trader (a) in response to an order received via the intermediary trader (b), a column to set a flag indicating direct delivery or not so that when the flag is set, the upstream trader (c) delivers the product directly to the downstream trader (a), and when the flag is not set, the upstream trader (c) delivers to the intermediary trader (b). By enabling the intermediary trader (b) to set this flag, more efficient transaction management can be achieved.

As described above, in the transaction pattern 2, when the product is not delivered directly to the downstream trader, respective transactions may be completed by using data structure of the transaction pattern 1 between the downstream trader (a) and the intermediary trader (b), and further using data structure of the transaction pattern 1 between the intermediary trader (b) and the upstream trader (c). In this case, a common transaction ID may be used, and a transaction between downstream and intermediary traders and a transaction between intermediary and upstream traders may be distinguishable using branch numbers. In such a way, a transaction in which the intermediary trader ships multiple orders collectively can be managed efficiently by providing branch numbers in the data structure of the pattern 1.

Above embodiments have been described by mainly illustrating transactions of the product. However, it should be apparent to a person skilled in the art that the embodiment can be also applied to provision of services as well. For example, in Fig. 18, Fig. 19, Fig. 21, and Fig. 24, the following terms also imply a term in parentheses: Product (service), product ID (service ID), order quantity (man-hour), shipment (delivery), delivery data/time (acceptance date/time), days of transportation (days of acceptance inspection or days of acceptance test), on shipment of product (on delivery), on arrival of product (on acceptance), and so on.

For example, in case that development of a program (service) is commissioned to an upstream trader (b) by a downstream trader (a), the purchase order (including an agreement) specifying a cost determined on the basis of the order quantity (man-hour) and unit price (man-hour unit price), by using the transaction pattern 1, and on delivery or on acceptance of the product, the invoice is issued by the upstream trader (b) to the downstream trader (a). At that time, the man-hour and the unit price may be set separately or may be set in any column (for example, in "order quantity" field) as total development cost, while setting a fixed value (for example, 1) to the other field (for example, "unit price" field). In such a case where a network operator mediates a consigned service, the transaction can be managed efficiently by using the transaction pattern 2.

### EXPLANATION OF THE REFERENCE NUMERALS

- 10: transaction management system
- 24: transmitter-receiver unit
- 26: central processing unit
- 28: data storage unit
- 40, 42, 44: user terminal
- 50: network
- 112: transmission/reception processing part
- 114: setting information reception part
- 118: order management part
- 120: transaction management information generation part
- 122: slip issuance processing part
- 126: delivery management part
- 128: distribution state management part
- 140: product information storage part
- 142: trader information storage part
- 144: transaction setting information storage part
- 146: price storage part
- 148: transaction setting information storage part
- 150: slip information storage part
- 152: inventory information storage part

## Claims

1. A transaction management system comprising:
a transaction setting information storage part configured to store an upstream trader from whom an intermediary trader purchases a product identified by a product ID, in association with the product ID and an intermediary trader ID of the intermediary trader;
a price storage part configured to store a first sales price which is a sales price of the product by an upstream trader identified with an upstream trader ID, in association with the product ID and the upstream trader ID, and to store a second sales price which is a sales price of the product by the intermediary trader, in association with the product ID and the intermediary trader ID;
an order management part configured to receive, from a downstream trader to whom the intermediary trader sells the product, an order of the product to the intermediary trader together with input of the product ID, a downstream trader ID of the downstream trader, and an order quantity of the product; and
a slip issuance processing part configured to issue an order slip from the downstream trader to the intermediary trader on the basis of the order quantity received by the order management part and the second sales price, and to issue an order slip from the intermediary trader to the upstream trader on the basis of the order quantity received by the order management part and the first sales price.

2. The transaction management system according to claim 1, wherein the slip issuance processing part issues a bill slip or a delivery slip from the upstream trader to the intermediary trader on the basis of the order quantity and the first sales price used to issue the order slip from the intermediary trader to the upstream trader, and issues a bill slip or a delivery slip from the intermediary trader to the downstream trader on the basis of the order quantity and the second sales price used to issue the order slip from the downstream trader to the intermediary trader.

3. The transaction management system according to claim 1 or 2, wherein
the transaction setting information storage part stores setting for a case where a product is ordered to an intermediary trader identified with the intermediary trader ID, in association with the intermediary ID, the product ID, and the upstream trader ID, the setting indicating the necessity of further ordering from the intermediary trader to an upstream trader identified with the upstream trader ID, and the propriety of automatic ordering,
if an order of a product from the downstream trader to the intermediary trader is received, the order management part turns on an orderable flag enabling processing for the order from the downstream trader to the intermediary trader, accesses the transaction setting information storage part, and, based on the setting of the necessity of further ordering to the upstream trader and the propriety of automatic ordering, turns on an orderable flag enabling processing for the order from the intermediary trader to the upstream trader when the setting indicates that the further ordering is needed and the automatic ordering is permitted, and
the slip issuance processing part issues an order slip from the downstream trader to the intermediary trader if the order management part turns on the orderable flag enabling the processing for the order from the downstream trader to the intermediary trader, and issues an order slip from the intermediary trader to the upstream trader if the order management part turns on the orderable flag enabling the processing for the order from the intermediary trader to the upstream trader.

4. The transaction management system according to any of claims 1 to 3,
comprising the transaction management information storage part configured to store transaction management information on an ordered product for each transaction, the transaction management information indicating a product ID of the product, a trader ID of an orderer of the product, a trader ID of an order recipient selling the product to the orderer, a trader ID of a shipping destination to which the order recipient ships the product, an order quantity, and a product shipment status to the shipping destination, and
further comprising a distribution state management part configured to, in response to an inquiry of stock quantity of the product in a inquiry target trader designated with the trader ID, the inquiry received together with designation of the trader ID and the product ID, access the transaction management information storage part, and calculate and present the stock quantity of the product in the inquiry target trader by subtracting the order quantity in the transaction management information in which the inquiry target trader is registered as an order recipient from the order quantity in the transaction management information in which the inquiry target trader is registered as an orderer and a shipping destination.

5. The transaction management system according to any of claims 1 to 4, comprising a delivery management part configured to:
in response to reception of a transaction ID and a shipment completion notice sent from a terminal of an upstream trader, determine whether an acceptance reference between traders of the transaction ID is acceptance on shipment or acceptance on delivery, and
if the acceptance reference is on shipment,
turn on a chargeable flag between the traders,
if the acceptance reference is on delivery,
register the transaction ID in a waiting list and thereafter,
thereafter stores a product receipt date if the product receipt date is sent from a terminal of the downstream trader,
periodically determine whether the product receipt date is stored for each transaction ID stored in the waiting list, and
if the product receipt date is written, turn on the chargeable flag of a transaction identified with the transaction ID between traders of acceptance on delivery,
wherein the slip issuance processing part creates slip data only for a transaction whose chargeable flag is turned on, according to a billing mode, immediately for every-transaction billing, and on a closing day for cycle billing.

6. The transaction management system according to claim 4 or 5, wherein when a product is shipped by any of the upstream traders to the intermediary trader or the downstream trader, the transaction management information storage part stores, as information indicating completion of the shipment in the transaction management information, the trader ID of the intermediary trader or the downstream trader to whom the product is shipped.

7. The transaction management system according to any one of claims 1 to 6, wherein the slip issuance processing part generates a purchase ledger or a sales ledger formed by accumulating information used for issuing the order slip.

8. A transaction management program causing a computer to function as:
a transaction setting information storage part configured to store an upstream trader ID from whom an intermediary trader purchases a product identified with a product ID, in association with the product ID and an intermediary trader ID of the intermediary trader,
a price storage part configured to store a first sales price being a sales price of the product by an upstream trader identified with the upstream trader ID, in association with the product ID and the upstream trader ID, and storing a second sales price being a sales price of the product by the intermediary trader, in association with the product ID and the intermediary trader ID,
an order acceptance part configured to receive, from a downstream trader to whom the intermediary trader sells the product, an order of the product to the intermediary trader together with input of the product ID, a downstream trader ID of the downstream trader, and an order quantity of the product, and
a slip issuance processing part configured to issue an order slip from the downstream trader to the intermediary trader on the basis of the order quantity received by the order management part and the second sales price, and issue an order slip from the intermediary trader to the upstream trader on the basis of the order quantity received by the order management part and the first sales price.
